(19) Europäisches Patentamt
European Patent Office
Office européen des brevets

(11) **EP 2 586 518 A1**

(12) **EUROPEAN PATENT APPLICATION**
published in accordance with Art. 153(4) EPC

(43) Date of publication:
**01.05.2013 Bulletin 2013/18**

(51) Int Cl.:
***B01D 61/00*** [(2006.01)]   ***B01D 63/02*** [(2006.01)]
***F03G 7/00*** [(2006.01)]   ***C02F 1/44*** [(2006.01)]

(21) Application number: **11800728.5**

(22) Date of filing: **24.06.2011**

(86) International application number:
**PCT/JP2011/064502**

(87) International publication number:
**WO 2012/002263 (05.01.2012 Gazette 2012/01)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **28.06.2010   JP 2010146956**

(71) Applicant: **Kyowakiden Industry Co., Ltd.
Nagasaki-shi, Nagasaki 852-8108 (JP)**

(72) Inventors:
 • **HAYASHI Hidechito
   Nagasaki-shi
   Nagasaki 852-8521 (JP)**
 • **OKUMURA Tetsuya
   Nagasaki-shi
   Nagasaki 852-8521 (JP)**
 • **SAKAI Hideyuki
   Nagasaki-shi
   Nagasaki 852-8108 (JP)**
 • **IRIE Morihiro
   Nisisonogi-gun
   Nagasaki 851-2107 (JP)**

(74) Representative: **Prüfer & Partner GbR
European Patent Attorneys
Sohnckestrasse 12
81479 München (DE)**

(54) **HOLLOW FIBER FORWARD OSMOSIS MEMBRANE**

(57)   It is an object of the present invention to provide a hollow fiber forward osmosis membrane, which can enhance forward osmotic pressure energy acquired by permeation, and thus improve power generation efficiency in the forward osmotic pressure power generation, when dilution water such as freshwater permeates into seawater through the osmosis membrane. The relationship between optimal conditions for an inner diameter d and a length L of the hollow fiber osmosis membrane to be used for forward osmotic pressure power generation whereby dilution water such as fresh water is caused to permeate into non-concentrate seawater through the hollow fiber osmosis membrane to increase a flow rate on the side of the seawater using forward osmotic pressure energy thus generated, and power is generated using the increased flow rate, is expressed as equation (1) in the range of d = 50 to 200 $\mu$m, L = 0.5 to 2 m and J = 1.7 $\times$ 10$^{-7}$ to 5.1 $\times$ 10$^{-7}$ m/sec,

J means permeation flux rate.

Fig. 25

[Equation 11]

$$\frac{d}{L^{0.75} \cdot J^{0.5}} = 1.0 \times 10^5 \sim 1.2 \times 10^5$$

wherein

**Description**

TECHNICAL FIELD

The present invention relates to a hollow fiber forward osmosis membrane used for forward osmotic pressure power generation that employs, for example, forward osmotic pressure energy of concentrate seawater generated at the same time when seawater is desalinated by a seawater desalination plant using reverse osmotic pressure, or forward osmotic pressure energy of non-concentrate seawater in the ocean or in the natural world.

BACKGROUND ART

For example, there is known forward osmotic pressure power generation whereby concentrate seawater, which has been generated at the same time when seawater is desalinated by a seawater desalination plant using reverse osmotic pressure, is caused to be permeated through an osmosis membrane with dilution water such as freshwater or seawater having lower saline concentration than the concentrate seawater to increase flow rate on the side of the concentrate seawater by forward osmotic pressure energy thus acquired, and power is generated using the flow rate thus increased.
Also, there is known another forward osmotic pressure power generation for causing dilution water such as freshwater to permeate into non-concentrate seawater in the ocean or in the natural world through, for example, an osmosis membrane, to increase flow rate on the side of the seawater by forward osmotic pressure energy thus acquired, and to generate power using the flow rate thus increased.
Patent Document 1: Japanese Unexamined Patent Application, Publication No. 2003-176775

DISCLOSURE OF THE INVENTION

PROBLEMS TO BE SOLVED BY THE INVENTION

However, in forward osmotic pressure power generation, no dedicated membrane has yet been developed as an osmosis membrane to be used to cause the dilution water such as freshwater or seawater having lower saline concentration than concentrate seawater to permeate through into the concentrate seawater. Similarly, no dedicated membrane has yet been developed as an osmosis membrane to be used to cause the dilution water such as freshwater to permeate through into the non-concentrate seawater in the ocean or in the natural world. Only as an interim solution, a hollow fiber reverse type osmosis membrane for use in seawater desalination has been employed. As a result thereof, contrary to initial expectations, the acquired forward osmotic pressure energy has been insufficient and the power generation efficiency has been far from satisfactory.
The present invention has been conceived in view of the above-stated drawbacks, and it is an object of the present invention to provide a hollow fiber forward osmosis membrane, which can enhance forward osmotic pressure energy acquired by permeation, and thus improve power generation efficiency in the forward osmotic pressure power generation, when dilution water such as freshwater or seawater lower in saline concentration than concentrate seawater permeates into the concentrate seawater through the osmosis membrane, or dilution water such as freshwater permeates into non-concentrate seawater in the ocean or in the natural world through the osmosis membrane.

MEANS FOR SOLVING THE PROBLEMS

In order to overcome the above-mentioned drawbacks, in accordance with a first aspect of the present invention, there is provided a hollow fiber forward osmosis membrane, wherein a relationship between optimal conditions for an inner diameter d and a length L of the hollow fiber osmosis membrane for use in forward osmotic pressure power generation which causes dilution water such as freshwater or seawater having a less saline concentration than concentrate seawater to permeate into the concentrate seawater through the hollow fiber osmosis membrane and to increase a flow rate on the side of the concentrate seawater using forward osmotic pressure energy thus generated, and generates power using the increased flow rate, is expressed as the following [Equation 1] in the range of d = 50 to 200 $\mu$m, L= 0.5 to 2 m, and J = 3.42×10$^{-7}$ to 6.84×10$^{-7}$ m/sec,
[0006]

[Equation 1]

$$\frac{d}{L^{0.75} \cdot J^{0.5}} = 1.9 \times 10^5 \sim 2.2 \times 10^5$$

wherein J means permeation flux rate.

Furthermore, in order to overcome the above-mentioned drawbacks, in accordance with a second aspect of the present invention, there is provided a hollow fiber forward osmosis membrane, wherein

the relationship between optimal conditions for an inner diameter d and a length L of the hollow fiber osmosis membrane for use in forward osmotic pressure power generation which causes a dilution water such as freshwater to permeate into non-concentrate seawater through the hollow fiber osmosis membrane, and to increase a flow rate on the side of the seawater using forward osmotic pressure energy thus generated, and generates power using the increased flow rate, is expressed as the following [Equation 11] in the range of d = 50 to 200 $\mu$m, L= 0.5 to 2 m, and J = 1.7$\times$10$^{-1}$ to 5.1$\times$10$^{-7}$ m/sec

[Equation 11]

$$\frac{d}{L^{0.75} \cdot J^{0.5}} = 1.0 \times 10^5 \sim 1.2 \times 10^5$$

wherein J means permeation flux rate.

EFFECTS OF THE INVENTION

In order to solve the aforementioned drawbacks, the hollow fiber forward osmosis membrane according to the first aspect of the present invention causes dilution water such as freshwater or seawater having a less saline concentration than concentrate seawater to permeate therethrough into the concentrate seawater, thereby increasing forward osmotic pressure energy, which increases a flow rate on the side of the seawater, and the increased flow can improve the power generation efficiency. Consequently, the hollow fiber forward osmosis membrane according to the first aspect of the present invention can provide a remarkably novel and beneficial effect of making it possible for the net energy calculated by subtracting the consumption energy consumed by the power generation from the output energy acquired by the power generation to be several times greater than the consumption energy.

Furthermore, in order to solve the aforementioned drawbacks, the hollow fiber forward osmosis membrane according to the second aspect of the present invention causes dilution water such as freshwater to permeate therethrough into non-concentrate seawater in the ocean or in the natural world, thereby increasing forward osmotic pressure energy, which increases a flow rate on the side of the seawater, and the increased flow rate can improve the power generation efficiency. Consequently, the hollow fiber forward osmosis membrane according to the second aspect of the present invention can provide a remarkably novel and beneficial effect of making it possible for the net energy calculated by subtracting the consumption energy consumed by the power generation from the output energy acquired by the power generation to be several times greater than the consumption energy.

BRIEF DESCRIPTION OF THE DRAWINGS

FIG. 1 is an explanatory drawing of a thick walled cylinder on which internal and external pressures are acting, according to a first embodiment of the present invention;

FIG. 2 is an explanatory drawing showing a method of tensile testing, according to the first embodiment of the present invention;

FIG. 3 is a graph showing a relationship between elastic deformation and weight, according to the first embodiment of the present invention;

FIG. 4 is a graph showing a relationship between outer and inner diameters, according to the first embodiment of the present invention;

FIG. 5 is an overall system diagram of forward osmotic pressure power generation according to the first embodiment of the present invention;

FIG. 6 is a graph showing permeation flux rate per hollow fiber forward osmosis membrane in relation to changes in length, according to the first embodiment of the present invention, wherein

FIG. 6A shows a case in which water completely permeates before reaching the end of the hollow fiber forward osmosis membrane, and FIG. 6B shows a case in which water permeates through the entire hollow fiber forward osmosis membrane (the permeated water is partially returned);

FIG. 7 is an explanatory drawing of permeation flux rate at an infinitesimal length, according to the first embodiment of the present invention;

FIG. 8 is a graph showing a relationship between an inner diameter and a permeation flux rate per element, according to the first embodiment of the present invention;

FIG. 9 is a partial perspective view showing a bunch of a plurality of hollow fiber forward osmosis membranes 1 tightly inserted into a cylindrical body 2 of 9 or 10 inch inner diameter, according to the first embodiment of the present invention;

FIG. 10 is a graph showing a variation of an overall efficiency $\eta_{all}$ in relation to changes of the permeation flux rate J, under the condition that the inner diameter of the cylindrical body 2 is 9 inches and the length of the hollow fiber forward osmosis membrane is 0.5 m, according to the first embodiment of the present invention;

FIG. 11 is a graph showing a variation of the overall efficiency $\eta_{all}$ in relation to changes of the permeation flux rate J, under the condition that the inner diameter of the cylindrical body 2 is 9 inches and the length of the hollow fiber forward osmosis membrane is 1 m, according to the first embodiment of the present invention;

FIG. 12 is a graph showing a variation of the overall efficiency $\eta_{all}$ in relation to changes of the permeation flux rate J, under the condition that the inner diameter of the cylindrical body 2 is 9 inches and the length of the hollow fiber forward osmosis membrane is 1.5 m, according to the first embodiment of the present invention;

FIG. 13 is a graph showing a variation of the overall efficiency $\eta_{all}$ in relation to changes of the permeation flux rate J, under the condition that the inner diameter of the cylindrical body 2 is 9 inches and the length of the hollow fiber forward osmosis membrane is 2 m, according to the first embodiment of the present invention;

FIG. 14 is a graph showing a variation of the overall efficiency $\eta_{all}$ in relation to changes of the permeation flux rate J, under the condition that the inner diameter of the cylindrical body 2 is 10 inches and the length of the hollow fiber forward osmosis membrane is 0.5 m, according to the first embodiment of the present invention;

FIG. 15 is a graph showing a variation of the overall efficiency $\eta_{all}$ in relation to changes of the permeation flux rate J, under the condition that the inner diameter of the cylindrical body 2 is 10 inches and the length of the hollow fiber forward osmosis membrane is 1 m, according to the first embodiment of the present invention;

FIG. 16 is a graph showing a variation of the overall efficiency $\eta_{all}$ in relation to changes of the permeation flux rate J, under the condition that the inner diameter of the cylindrical body 2 is 10 inches and the length of the hollow fiber forward osmosis membrane is 1.5 m, according to the first embodiment of the present invention;

FIG. 17 is a graph showing a variation of the overall efficiency $\eta_{all}$ in relation to changes of the permeation flux rate J, under the condition that the inner diameter of the cylindrical body 2 is 10 inches and the length of the hollow fiber forward osmosis membrane is 2 m, according to the first embodiment of the present invention;

FIG. 18 is a graph showing a fact that an optimal condition parameter falls within the range shown by [Equation 1] when the length of the hollow fiber forward osmosis membrane is within the conditional range according to the first embodiment of the present invention;

FIG. 19 is an explanatory drawing of a thick walled cylinder on which internal and external pressures are acting, according to a second embodiment of the present invention;

FIG. 20 is an explanatory drawing showing a method of tensile testing according to the second embodiment of the present invention;

FIG. 21 is a graph showing a relationship between elastic deformation and weight, according to the second embodiment of the present invention;

FIG. 22 is a graph showing a relationship between outer and inner diameters, according to the second embodiment of the present invention;

FIG. 23 is an overall system diagram of forward osmotic pressure power generation according to the second embodiment of the present invention;

FIG. 24 is a graph showing permeation flux rate per hollow fiber forward osmosis membrane in relation to changes in length, according to the second embodiment of the present invention, wherein FIG. 24A shows a case in which water completely permeates before reaching the end of the hollow fiber forward osmosis membrane, and FIG. 24B shows a case in which water permeates through the entire hollow fiber forward osmosis membrane (permeated water is partially returned);

FIG. 25 is an explanatory drawing of permeation flux rate at an infinitesimal length, according to the second embodiment of the present invention;

FIG. 26 is a graph showing a relationship between an inner diameter and permeation flux rate per element, according to the second embodiment of the present invention;

FIG. 27 is a partial perspective view when a bunch of a plurality of hollow fiber forward osmosis membranes 1 tightly inserted into a cylindrical body 2 of 9 or 10 inch inner diameter, according to the second embodiment of the present invention;

FIG. 28 is a graph showing a variation of an overall efficiency $\eta_{all}$ in relation to changes of the permeation flux rate J, under the condition that the inner diameter of the cylindrical body 2 is 9 inches and the length of the hollow fiber forward osmosis membrane is 0.5 m, according to the second embodiment of the present invention;

FIG. 29 is a graph showing a variation of the overall efficiency $\eta_{all}$ in relation to changes of the permeation flux rate J, under the condition that the inner diameter of the cylindrical body 2 is 9 inches and the length of the hollow fiber forward osmosis membrane is 1 m, according to the second embodiment of the present invention;

FIG. 30 is a graph showing a variation of the overall efficiency $\eta_{all}$ in relation to changes of the permeation flux rate J, under the condition that the inner diameter of the cylindrical body 2 is 9 inches and the length of the hollow fiber forward osmosis membrane is 1.5 m, according to the second embodiment of the present invention;

FIG. 31 is a graph showing a variation of the overall efficiency $\eta_{all}$ in relation to changes of the permeation flux rate J, under the condition that the inner diameter of the cylindrical body 2 is 9 inches and the length of the hollow fiber forward osmosis membrane is 2 m, according to the second embodiment of the present invention;

FIG. 32 is a graph showing a variation of the overall efficiency $\eta_{all}$ in relation to changes of the permeation flux rate J, under the condition that the inner diameter of the cylindrical body 2 is 10 inches and the length of the hollow fiber forward osmosis membrane is 0.5 m, according to the second embodiment of the present invention;

FIG. 33 is a graph showing a variation of the overall efficiency $\eta_{all}$ in relation to changes of the permeation flux rate J, under the condition that the inner diameter of the cylindrical body 2 is 10 inches and the length of the hollow fiber forward osmosis membrane is 1 m, according to the second embodiment of the present invention;

FIG. 34 is a graph showing a variation of the overall efficiency $\eta_{all}$ in relation to changes of the permeation flux rate J, under the condition that the inner diameter of the cylindrical body 2 is 10 inches and the length of the hollow fiber forward osmosis membrane is 1.5 m, according to the second embodiment of the present invention;

FIG. 35 is a graph showing a variation of the overall efficiency $\eta_{all}$ in relation to changes of the permeation flux rate J, under the condition that the inner diameter of the cylindrical body 2 is 10 inches and the length of the hollow fiber forward osmosis membrane is 2 m, according to the second embodiment of the present invention; and

FIG. 36 is a graph showing a fact that an optimal condition parameter falls within the range shown by [Equation 11] when the length of the hollow fiber forward osmosis membrane is within the conditional range according to the second embodiment of the present invention.

EXPLANATION OF REFERENCE NUMERALS

1    hollow fiber forward osmosis membrane

2    cylindrical body

BEST MODE FOR CARRYING OUT THE INVENTION

<First Embodiment>

The description hereinafter is directed to how the relationship of optimal conditions for a hollow fiber forward osmosis membrane according to the present invention has been acquired.
In view of forward osmotic pressure power generation using a hollow fiber forward osmosis membrane, the presently employed hollow fiber type reverse osmosis membrane is insufficient to achieve an optimal situation. The inventor of the present invention has found optimal membrane conditions for forward osmotic pressure power generation by conducting following evaluations.

(1) Optimal Thickness in Relation to Inner Diameter of Hollow Fiber Forward Osmosis Membrane
The hollow fiber osmosis membrane for reverse osmosis is used at a pressure of 8 MPa, while, on the other hand, the hollow fiber osmosis membrane for forward osmosis power generation is used at a pressure of 3 MPa, which is less than half of the pressure in the case of the reverse osmosis. Accordingly, it appears possible to reduce the thickness of the hollow fiber forward osmosis membrane. The inventor of the present invention thought that great effect could be expected if the thickness of the membrane were reduced since concentration polarization within the membrane could be suppressed.

(2) Calculation of System Efficiency

As described in the above, in order to acquire optimal parameters for forward osmotic pressure power generation, it is required to calculate the system efficiency. By calculating the system efficiency, it becomes possible to practically evaluate the forward osmotic pressure power generation.

(3) Theoretical Calculation of Variation of Permeation flux Rate per Element in Relation to Variation of Inner Diameter of Hollow Fiber Forward Osmosis Membrane

In the case of the hollow fiber type reverse osmosis membrane, freshwater comes into the hollow fiber osmosis membrane as a result of high pressure on the side of saline water. On the other hand, in the case of the forward osmotic pressure power generation, since freshwater flowing in the hollow fiber osmosis membrane permeates on the side of seawater, the freshwater may completely permeate before reaching the end of the hollow fiber osmosis membrane, depending upon the amount of the flowing freshwater. On the other hand, if a sufficient amount of freshwater flows in the hollow fiber osmosis membrane, this results in a heavy loss in the view of power generation efficiency. Accordingly, it is required to find out optimal flowing conditions on the side of freshwater of the hollow fiber osmosis membrane in the forward osmotic pressure power generation.

(4) On the bases of the aforementioned evaluations, optimal parameter conditions have been acquired for the hollow fiber forward osmosis membrane.

(1) Optimal Thickness in Relation to Inner Diameter of Hollow Fiber Forward Osmosis Membrane

Currently, the hollow fiber osmosis membrane for reverse osmosis is employed. This kind of hollow fiber osmosis membrane is designed to have a thickness sufficient not to break even under a pressure of 8 MPa. On the other hand, in the forward osmotic pressure power generation, experiments so far show that an optimal pressure is 3 MPa, i.e., less than half is sufficient for pressure resistance. The optimal thickness in this case has been calculated as follows.

1) Theoretical calculation of a stress generated in the hollow fiber forward osmosis membrane.
2) Evaluation test of a yield stress of the hollow fiber forward osmosis membrane.
3) Calculation of an optimal thickness for use in the forward osmotic pressure power generation based on safety factor.

1) Theoretical Calculation of Stress Generated in Hollow Fiber Forward Osmosis Membrane

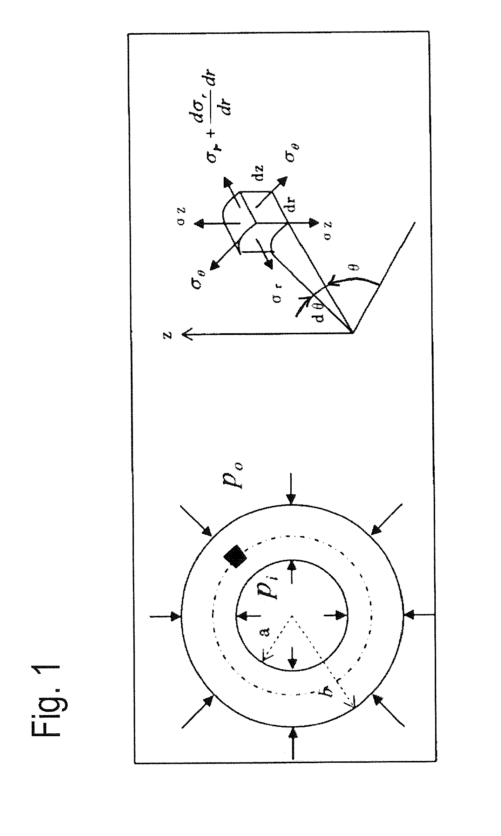

A stress in a circumferential direction generated by internal and external pressures exerted on the hollow fiber forward osmosis membrane shown in FIG. 1 can be expressed by the following [Equation 2].

[Equation 2]

$$\sigma_r = \frac{1}{b^2 - a^2}\left\{P_i \cdot a^2\left(1 - \frac{b^2}{r^2}\right) - P_o \cdot b^2\left(1 - \frac{a^2}{r^2}\right)\right\}$$

$$\sigma_\theta = \frac{1}{b^2 - a^2}\left\{P_i \cdot a^2\left(1 + \frac{b^2}{r^2}\right) - P_o \cdot b^2\left(1 + \frac{a^2}{r^2}\right)\right\} \quad \cdot \cdot \cdot (1)$$

$$\sigma_z = 2\upsilon\,\frac{P_i \cdot a^2 - P_o \cdot b^2}{b^2 - a^2} + E\varepsilon_z = \upsilon\left(\sigma_r + \sigma_z\right) + E\varepsilon_z$$

wherein $P_o$ denotes an external pressure, $P_i$ denotes an internal pressure, a denotes an inner radius, b denotes an outer radius, $\sigma_r$ denotes a stress in a radial direction, $\sigma_\theta$ denotes a stress in a circumferential direction, and $\sigma_z$ denotes a stress in an axial direction (see Saimoto, A., Hirano, T., Imai, Y. "Material Mechanics" pp. 108-110).

Since both ends of the hollow fiber forward osmosis membrane can be assumed to be open in this case, $\sigma_z = 0$. Furthermore, owing to the condition $P_o \gg P_i$, $|\sigma_r| < |\sigma_\theta|$. Accordingly, $\sigma_\theta$ is the maximum stress in the hollow fiber forward osmosis membrane.

2) Evaluation Test of Yield Stress of Hollow Fiber Forward Osmosis Membrane

In order to prevent plastic deformation against the above described stress, an appropriate thickness is required. Therefore, an experiment has been conducted to calculate a yield point, and the optimal thickness has been considered in view of the yield point.

Method of Experiment

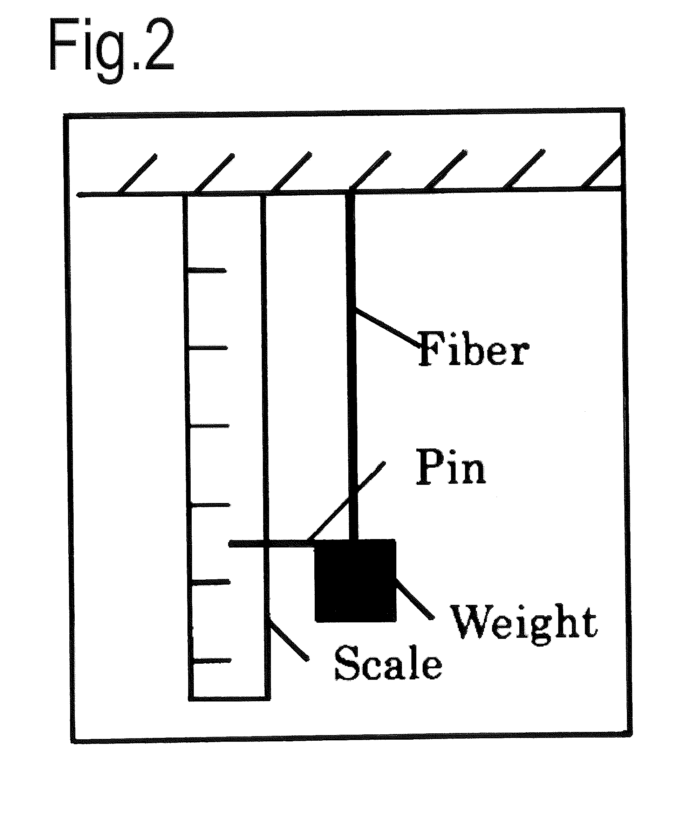

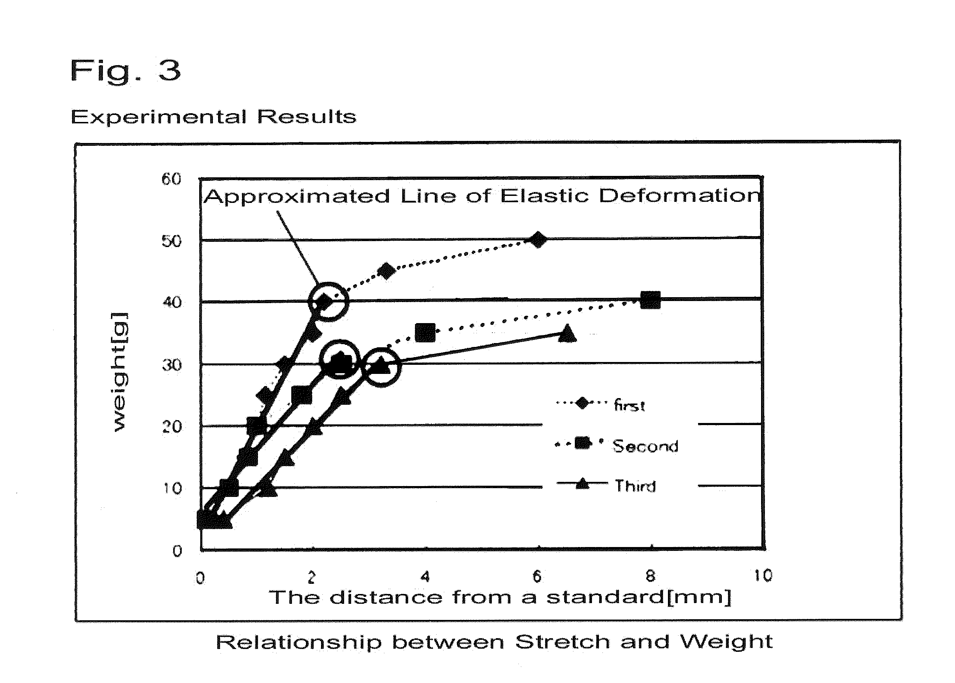

The yield stress has been acquired by conducting a tensile test as shown in FIG. 2. As an original point, a position at which the pin was placed when no weight was hung was marked on the scale. Firstly, a weight of 5 g was hung, and the distance the pin moved from the original point was measured on the scale. Then, the weight was removed, and it was checked whether or not the pin returned to the original point. In this manner, similar measurements were subsequently conducted with weights of 10g, 15g, ..., 40g, in ascending order of weight so as to ascertain a weight from which the plastic deformation begins to occur. Such experiments were repeated three times. The result of the experiments (relationship between stretch and weight) is shown in a graph of FIG. 3.

It is assumed that the plastic deformation begins to occur at the weight where a slope of the graph remarkably changes. Since, the second and third experiments showed the similar results in FIG. 3, it is determined that the plastic deformation begins at a weight of 30 g. Denoting a cross section area as A and a weight as F, the yield stress is calculated from the following equation [Equation 3]. This indicates that the value is approximately the same as that of nylon.

[Equation 3]

Yield stress $\sigma_y$ is expressed as follows.

$$\sigma_y = \frac{F}{A} = \frac{30 \cdot 10^{-3} \cdot 9.8}{\frac{\pi}{4}\left(d_o^2 - d_i^2\right)} = 35.7 [\text{MPa}] \cdot \cdot \cdot (2)$$

(nylon $\sigma_y$ = 40[MPa])

3) Calculation of Optimal Thickness for Use in Forward Osmotic Pressure Power Generation Based on Safety Factor

The currently employed hollow fiber forward osmosis membrane is designed to have a thickness sufficient not to break even under a pressure of 8 MPa. A theoretical radius a of the hollow fiber forward osmosis membrane is calculated as follows:

Firstly, as the actual hollow fiber forward osmosis membrane specifications, the values of the outer radius b = 55[μm], the external pressure Po = 8 [MPa], and the internal pressure Pi = 20 [kPa] are assigned to the term of theoretical stress $\sigma_\theta$ of the hollow fiber forward osmosis membrane in Equation (1). Then, assuming that the maximum stress position r = a, and using the yield stress $\sigma_y$ calculated as a result of Equation (2), in view of $\sigma_\theta < \sigma_y$, which is a condition for preventing the hollow fiber forward osmosis membrane from breaking, the theoretical radius a is acquired as 40μm.

Accordingly, a theoretical thickness is acquired as follows.

```
t' = b - a = 55 - 40 = 15[μm].
```

However, the actual thickness is made thicker than the theoretical thickness in view of safety factor. Using the actual thickness t = 35[μm], the safety factor is acquired as follows.

```
s = 35 / 15 = 2.333… = 2.5
```

Since the external pressure applied to the hollow fiber forward osmosis membrane is approximately 3 MPa in an actual environment, using a condition of the external pressure = 3 MPa and the safety factor as acquired in the above, a thickness to which the safety factor is applied is estimated.

Equation (1) is calculated in a similar way, by merely changing the external pressure Po = 3 Mpa in Equation (1), a theoretical inner radius a = 50[μm] is acquired. As a result of this, thickness t' = 55 - 50 = 5[μm] is acquired. In view of the safety factor, the thickness t is acquired as follows (outer radius standard).

```
t = s·t' = 2.5 × 5 = 12.5[μm]
```

Based on the above results, a relationship between thickness and inner diameter in view of the safety factor is acquired as follows.

$$t = 0.118di + 2 \times 10^{-6} \cdots \cdots (3)$$

The thickness is expressed as follows.

$$do - di = 2t \cdots \cdots \cdots \cdots (4)$$

di is acquired from Equation (3),

$$di = (do - 4 \times 10^{-6}) / 1.236 \cdots (5)$$

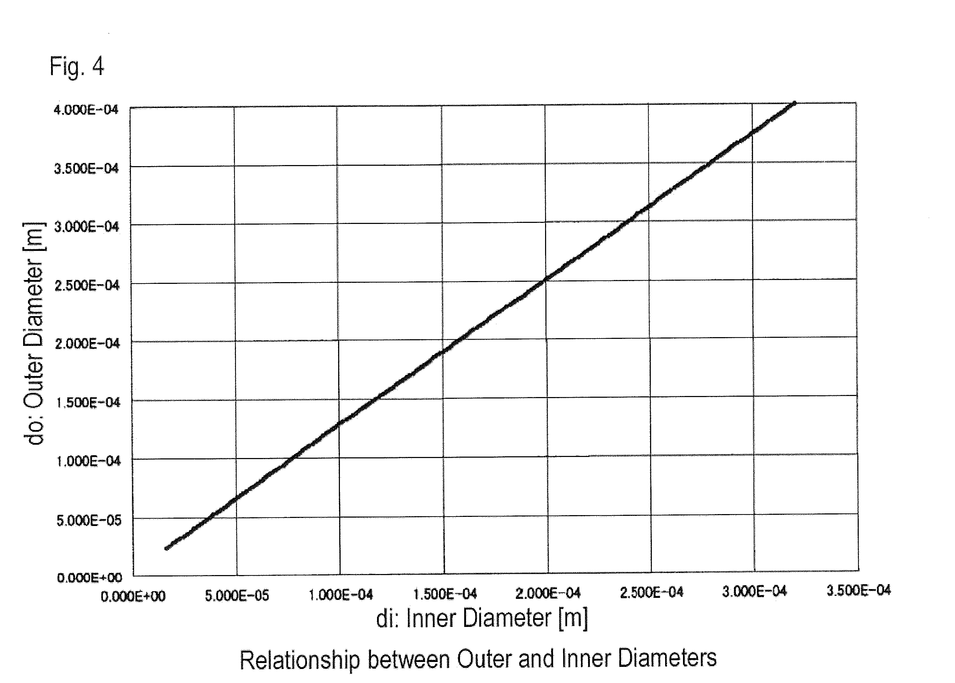

From equation (5), a relationship between outer and inner diameters is acquired, which is shown in FIG. 4.

(2) Calculation of System Efficiency

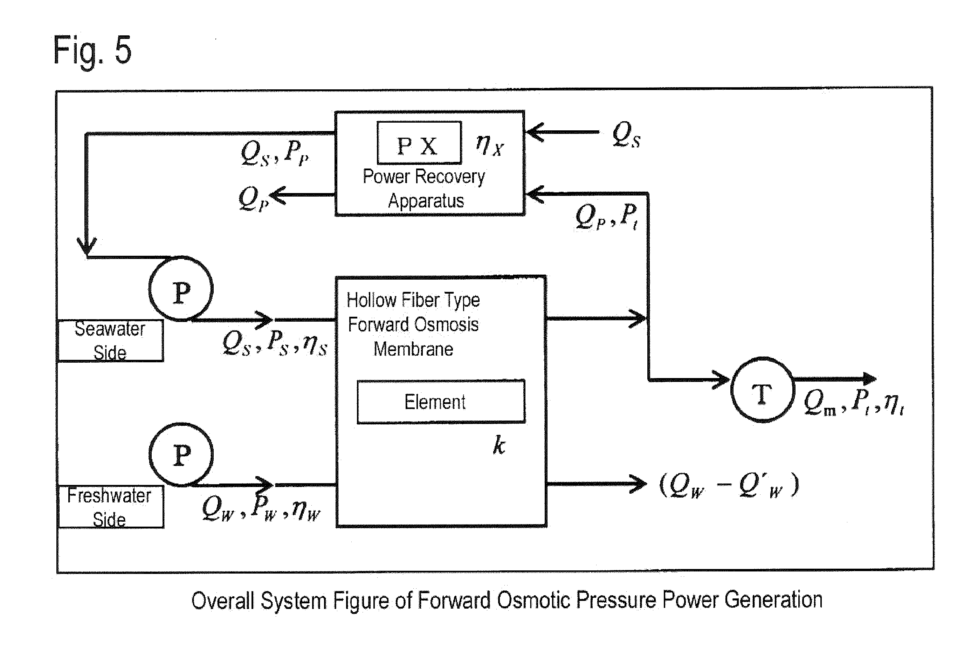

Here, instead of efficiency of a single hollow fiber forward osmosis membrane, efficiency of the entire forward osmotic pressure power generation system shown in FIG. 5 is considered. The explanation of reference numerals in FIG. 5 is shown in [Equation 4]. The calculation of system efficiency is shown in [Equation 5] and [Equation 6]. The power recovery apparatus in [Equation 5] is denoted by "PX" in FIG. 5.
```
[Equation 4]
Seawater side pump power:  Es
Freshwater side pump power:  Ew
Seawater side pump efficiency:  η_s
Freshwater side pump efficiency:  η_w
Seawater side pump pressure:  Ps
Freshwater side pump pressure:  Pw
Seawater side pump compression flow rate:  Qs

Freshwater side pump compression flow rate:  Qw
Turbine flow rate:  Qm
Permeation flux rate:  Q'w
Turbine output:  Et
Turbine efficiency:  η_t
Power recovery apparatus efficiency:  η_x
Power recovery apparatus outlet pressure:  Pp
```

[Equation 5]

Output

$$E_t = \eta_t \cdot P_t \cdot Q_m$$

Power

$$E_s = \frac{(P_s - P_p)Q_s}{\eta_s}$$

$$E_w = \frac{P_w \cdot Q_w}{\eta_w}$$

Flow rate

$$Q_m = (Q_s + Q'_w) - Q_p$$

Loss in a unit

$$P_t = kP_s$$

The net output calculated from the above equations is expressed as follows.

$$E_n = E_t - (E_s + E_w)$$
$$= \eta_t \cdot P_t \cdot Q_m - \left(\frac{(P_s - P_p)Q_s}{\eta_s} + \frac{P_w \cdot Q_w}{\eta_w}\right)$$
$$= \eta_t \cdot kP_s(Q_s + Q'_w - Q_p) - \left(\frac{(P_s - P_p)Q_s}{\eta_s} + \frac{P_w \cdot Q_w}{\eta_w}\right)$$

Since the following conditions are required in the power recovery apparatus,

$$Q_p = hQ_s \ (h \cong 1),$$

The following condition is required.

$$P_p = \eta_x kP_s$$

Accordingly, it follows that

$$E_n = \eta_t \cdot kP_s(Q'_w + (1-h)Q_s) - \frac{1 - k\eta_x}{\eta_s}P_s Q_s - \frac{P_w \cdot Q_w}{\eta_w}$$

[Equation 6]

Defining a permeating rate x (1 > x) as a rate of freshwater permeating into seawater, a flow rate between inlet and outlet on the freshwater side is expressed as follows.

$$Q'_w = Q_w \cdot x.$$

Defining y (1 >> y) as a ratio of freshwater side pressure to seawater side pressure, Pw / Ps = y follows.

Defining z (1 > z) as a ratio of freshwater side inlet flow rate to seawater side flow rate,

$$Qw \ / \ Qs \ = \ z$$

follows.
Using the above definitions,

$$E_n = k\eta_t P_s \{(1-h)Q_s + xzQ_s\} - \left(\frac{1-k\eta_x}{\eta_s}P_s Q_s + \frac{yz}{\eta_w}P_s Q_s\right)$$

$$= \left\{k\eta_t(1-h) + k\eta_t xz - \frac{1-k\eta_x}{\eta_s} - \frac{yz}{\eta_w}\right\}P_s Q_s$$

Thus, the overall efficiency is expressed as follows.

$$\eta_{all} = \frac{E_n}{E_s + E_w} = \frac{\left\{k\eta_t(1-h) + k\eta_t xz - \frac{1-k\eta_x}{\eta_s} - \frac{yz}{\eta_w}\right\}P_s Q_s}{\left(\frac{1-k\eta_x}{\eta_s} + \frac{yz}{\eta_w}\right)P_s Q_s} \quad \cdot \cdot \cdot (6)$$

The overall efficiency $\eta_{all}$ of Equation (6) is acquired by dividing net energy by consumption energy, wherein the net energy is acquired by subtracting the consumption energy from output energy. The output energy is energy generated by the forward osmotic pressure power generation. The consumption energy is energy consumed for operating the forward osmotic pressure power generation.

(3) Theoretical Calculation of Variation of Permeation Flux Rate per Element in Relation to Variation of Hollow Fiber Forward Osmosis Membrane Inner Diameter

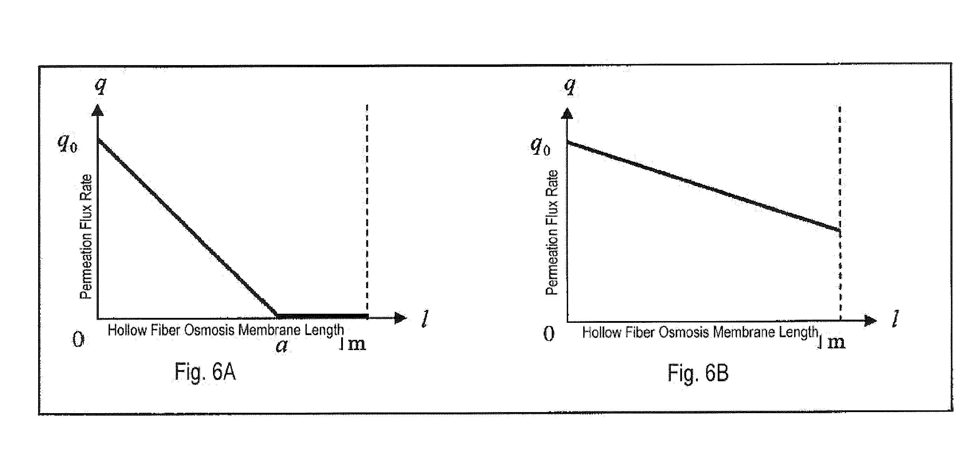

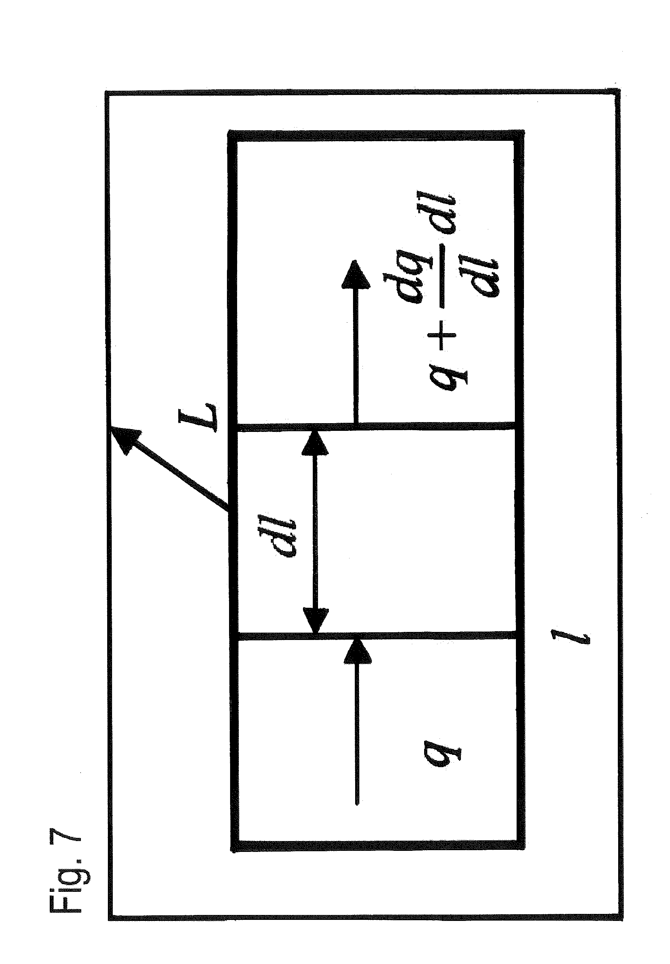

FIG. 6 shows the permeation flux rate per hollow fiber forward osmosis membrane in relation to changes in length. Here, FIG. 6A shows a case in which water completely permeates before reaching the end of the hollow fiber forward osmosis membrane, and FIG. 6B shows a case in which water permeates through the entire hollow fiber forward osmosis membrane (the permeated water is partially returned).
Assuming the length of the hollow fiber forward osmosis membrane to be l m, two cases of FIGS. 6A and 6B are considered. As for the case of FIG. 6A, water completely permeates before reaching l m. On the other hand, as for the case of FIG. 6B, water permeates through the entire hollow fiber forward osmosis membrane.
[Equation 7] to [Equation 9] show how the case of FIG. 6A in which water completely permeates before reaching the end of the hollow fiber forward osmosis membrane is theoretically calculated with reference to FIG. 7.

[Equation 7]

The linear part of the graph in FIG. 7A can be represented by the following equation.

$$q(l) = -\frac{q_0}{a}l + q_0 \quad \cdot \cdot \cdot (7)$$

The permeation flux rate L for an infinitesimal length dl is represented as follows.

$$L = J \times dl \times \pi\, d_i \,[\mathrm{m}^3/s]$$

$$q = \left(q + \frac{dq}{dl}\, dl\right) + L$$

$$0 = \frac{dq}{dl}\, dl + \left(J \times dl \times \pi\, d_i\right)$$

$$\frac{dq}{dl} = -J \cdot \pi\, d_i$$

$$q(l) = -J\,\pi\, d_i \cdot l + q_0 \quad \cdot \ \cdot \ \cdot (8)$$

(Note: d represents the inner diameter of the hollow fiber forward osmosis membrane)
From Equations (7) and (8),

$$-\frac{q_0}{a} = -\pi\, d_i J$$

$$\therefore\ a = \frac{q_0}{\pi\, d_i J}$$

[Equation 8]

A friction loss Δp up to a hollow fiber forward osmosis membrane distance a is acquired as follows: Using a pressure drop head,

$$\Delta h = \lambda\, \frac{l}{d_i} \cdot \frac{V^2}{2g},$$

a laminar pipe friction coefficient

$$\lambda = \frac{64}{Re},$$

and the Reynolds number

$$Re = \frac{V \cdot d_i}{v},$$

Accordingly, the pressure drop head can be derived as follows.

$$\Delta h = \frac{32 \cdot l \cdot v \cdot V}{d_i^2\, g}$$

Therefore, the pressure drop is expressed as follows.

$$p = \rho g \Delta h = \frac{128 \cdot 1 \cdot \nu \cdot \rho}{\pi \cdot d_i^4} q \quad \left( \because \nu = \frac{q}{\frac{\pi}{4} d_i^2} \right)$$

$$dp = \frac{128 \cdot \nu \cdot \rho}{\pi \cdot d_i^4} q \cdot dl$$

From the above, the following equation is acquired.

$$\Delta p = \int_0^a \frac{128 \cdot \frac{\mu}{\rho} \cdot \rho}{\pi \cdot d_i^4} q \cdot dl = \frac{128\mu}{\pi d_i^4} \int_0^a (-\pi J d_i \cdot 1 + q_0) dl$$

$$= \frac{128\mu}{\pi d_i^4} \left( -\frac{\pi J d_i}{2} a^2 + q_0 a \right) = \frac{128\mu}{\pi d_i^4} \cdot \frac{q_0^2}{2\pi d_i J} = \frac{64\mu}{\pi^2 d_i^5 J} q_0^2$$

[Equation 9]

Therefore, the permeation flux rate per fiber and the permeation flux rate per entire element are expressed as follows.

$$q_0 = \sqrt{\frac{\pi^2 J d_i^5 \Delta p}{64\mu}} = \frac{\pi d_i^{2.5}}{8} \sqrt{\frac{J \Delta p}{\mu}}$$

$$Q = N \cdot q_0 = \frac{A}{d_0^2} \alpha \cdot \frac{\pi d_i^{2.5}}{8} \sqrt{\frac{J \Delta p}{\mu}} \quad \cdots \quad (9)$$

[Equation 10] shows how the case of FIG. 6B in which water permeates through the entire hollow fiber forward osmosis membrane (the permeated water is partially returned) is theoretically calculated.

[Equation 10]

The permeation flux rate per fiber $q_0$ is a product of an inner surface area $\pi \cdot d_i \cdot l$ and the permeation flux rate per unit area J, expressed as follows.

$$q_0 = \pi \cdot d_i \cdot L \cdot J$$

From this, the permeation flux rate per element Q is expressed as follows. As will be seen, the permeation flux rate per element is dependent merely upon inner and outer diameters.

$$Q = N \cdot q_0 = \frac{A}{d_0^2} \alpha \cdot q_0 = \frac{A}{d_0^2} \alpha \cdot \pi \cdot d_i \cdot L \cdot J \quad \cdots \quad (10)$$

N: the number of hollow fiber forward osmosis membranes per element
A: the cross section area of a module
do: the outer diameter of the hollow fiber forward osmosis membrane

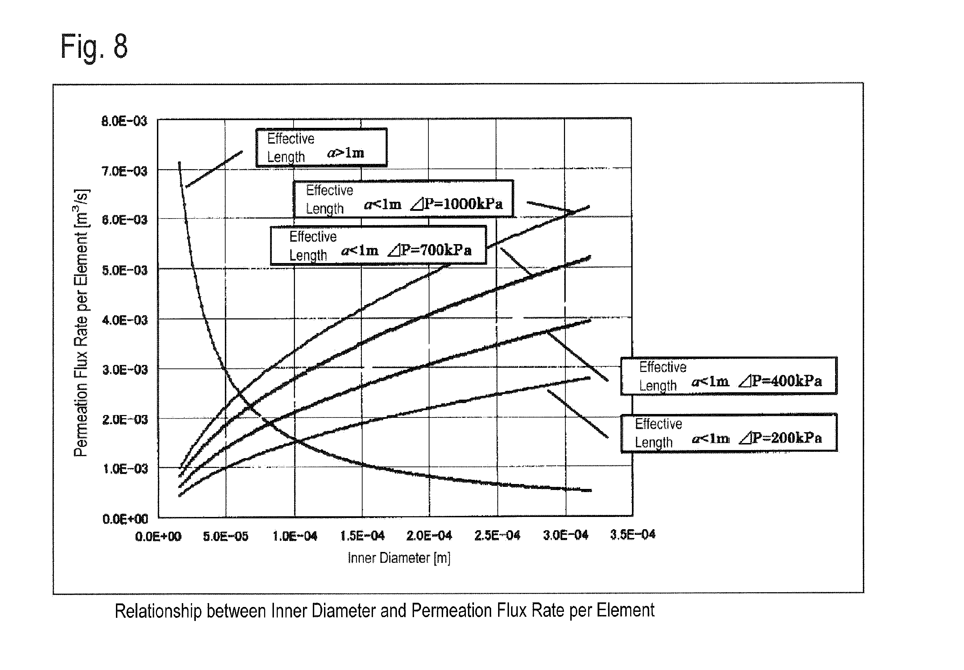

$\alpha$: an effective packing ratio of hollow fiber forward osmosis membranes in the module
di: the inner diameter of the hollow fiber forward osmosis membrane
J: the permeation flux rate per unit area
Substituting $J = 3.426 \times 10^{-6}$ [m/s], which is determined with reference to Honda, T., "Bulletin of the Society of Sea Water Science, Japan" Vol. 44, No. 6 (1990) into Equations (9) and (10), the graph in FIG. 8 can be drawn (l is assumed to be 1 m).

(4) Optimal Parameter Conditions of Hollow Fiber Forward Osmosis Membrane

Using the results of (1) to (3) described above, optimal conditions of the hollow fiber forward osmosis membrane are acquired.
Here, it is assumed as follows.

```
Unit internal efficiency k = Pt / Ps = 0.95
```

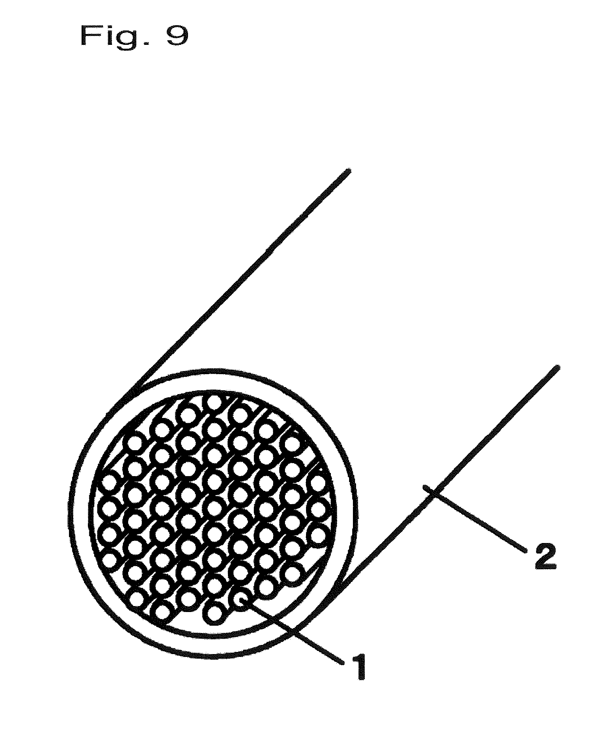

Efficiency of the power recovery apparatus $\eta_x$ = Pp / Ps = 0.9 Flow rate ratio of the power recovery apparatus h = Qp / Qs = 0.9 Seawater side pump efficiency $\eta_s$ = 0.85, the freshwater side pump Efficiency $\eta_w$ = 0.85
Turbine pump efficiency $\eta_t$ = 0.85
As shown in FIG. 9, it is assumed that a bunch of a plurality of hollow fiber forward osmosis membranes 1 (which is referred to as an "element" in the present specification) is tightly inserted inside of the cylindrical body 2 of 9 or 10 inch inner diameter. Parameters in both cases of 9 inch and 10 inch are shown in Tables 1 and 2 respectively. The overall efficiency $\eta_{all}$ is acquired from the above described Equation (6) by changing the length of the hollow fiber forward osmosis membrane l and the permeation flux rate per unit area J, under conditions of Tables 1 and 2. As the membrane element of the hollow fiber forward osmosis membrane 1, HD10155EI (product of Toyobo Co., Ltd.) was employed.
[Table 1]

| 9 inch | |
|---|---|
| (Sewage water) data from company 9 inch four ports type | |
| May 19, 2009 | |
| Pump efficiency $\eta_s$ = | 0.9 |
| $\eta_w$ = | 0.85 |
| Freshwater flow rate Qw = | 10.5 l/min |
| Permeation flux rate Q'w = | 10.5 l/min |
| Returned water = | 0 |
| Freshwater side pressure Pw = | 500 kPa |
| Concentrate seawater flow rate Qs = | 19.69 l/min |
| Concentrate seawater pressure Ps = | 3 Mpa |
| Mixed water flow rate Qs+Q'w = | 30.44 l/min |
| Element outlet pressure Pt = | 2.53 Mpa |

[Table 2]

| 10 inch | |
|---|---|
| (Sewage water) data from company 10 inch four ports type | |
| Oct. 17, 2009 | |
| Pump efficiency $\eta_s$ = | 0.9 |
| $\eta_w$ = | 0.85 |
| Freshwater flow rate Qw = | 10.99 l/min |
| Permeation flux rate Q'w = | 10.18 l/min |
| Returned water = | 0.81 l/min |
| Freshwater side pressure Pw = | 500 kPa |

(continued)

| | |
|---|---|
| Concentrate seawater flow rate Qs = | 19.76 l/min |
| Concentrate seawater pressure Ps = | 3 Mpa |
| Mixed water flow rate Qs+Q'w = | 29.94 l/min |
| Element outlet pressure Pt = | 2.5 Mpa |

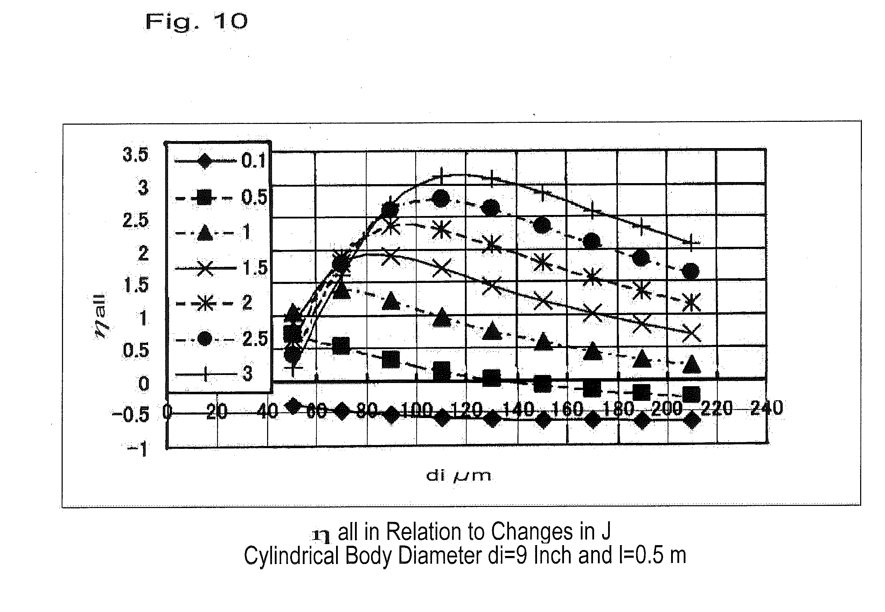

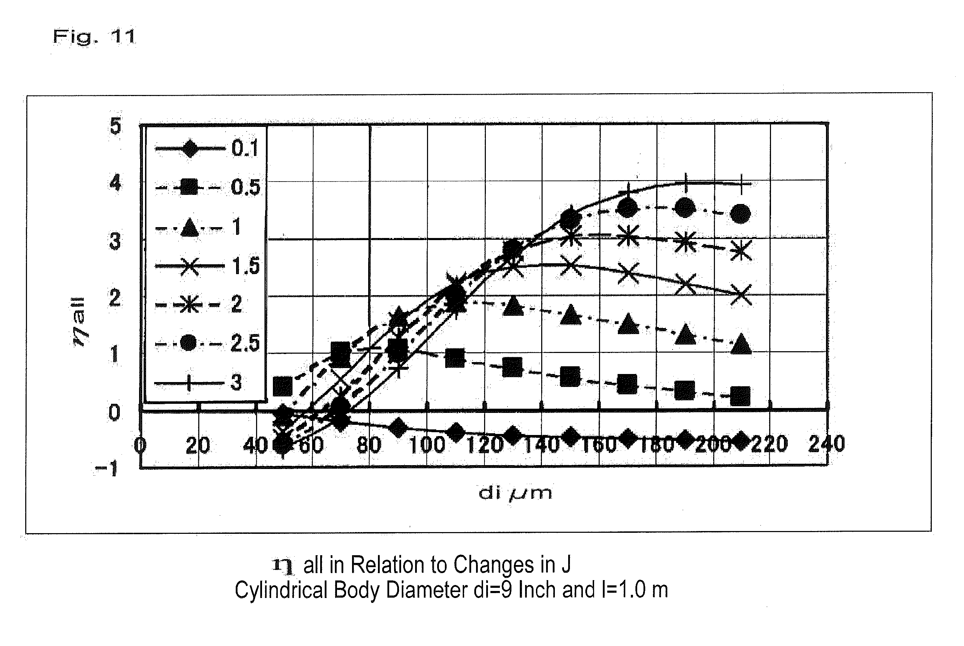

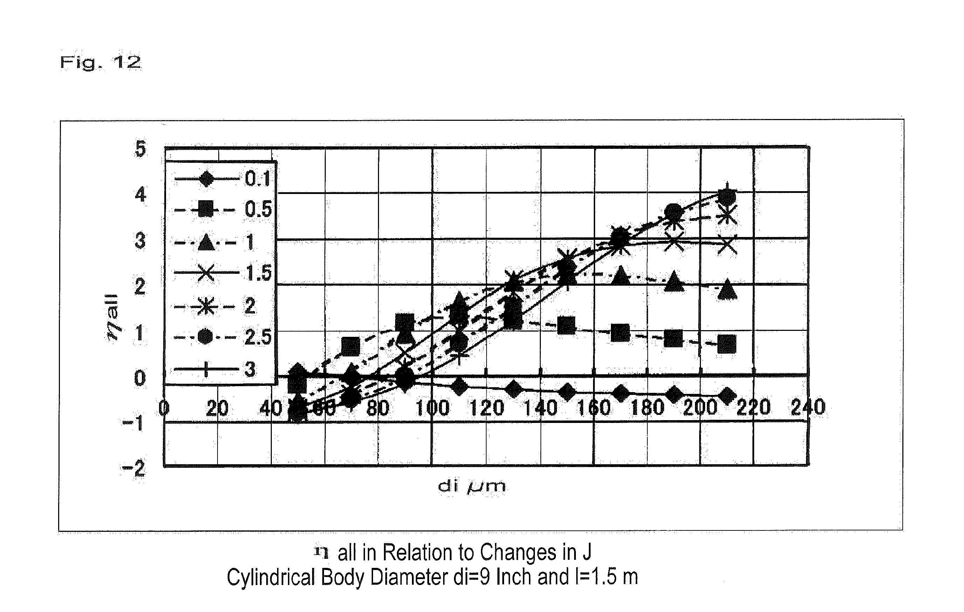

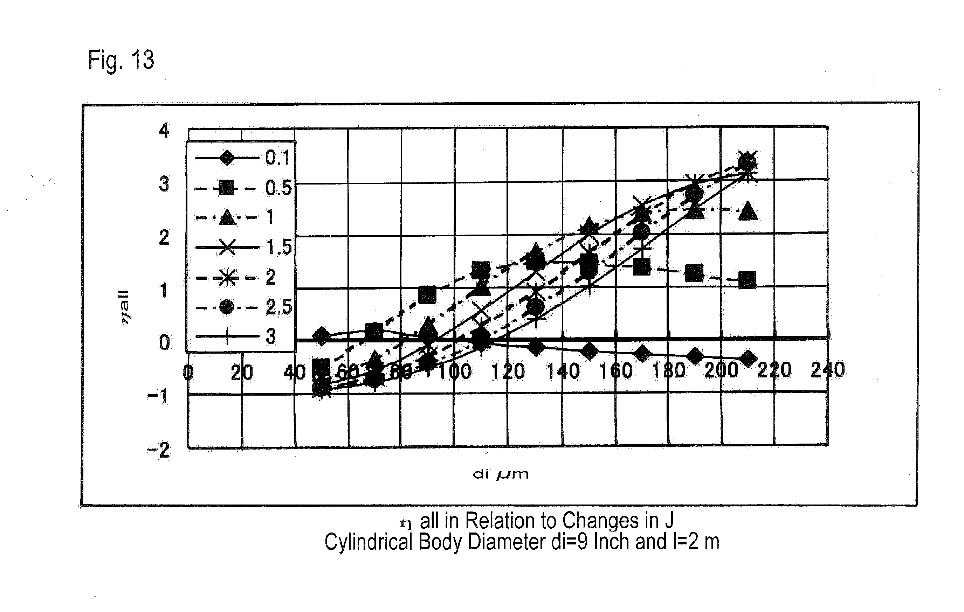

The overall efficiency $\eta_{all}$ in a case in which a bundle of hollow fiber forward osmosis membranes is inserted into a 9 inch diameter cylindrical body is shown in Tables 3 to 6 and FIGS. 10 to 13. As described above, the overall efficiency $\eta_{all}$ is acquired by dividing a net energy by the consumption energy, wherein the net energy is acquired by subtracting a consumption energy from an output energy. The output energy is an energy generated by the forward osmotic pressure power generation. The consumption energy is an energy consumed for operating the forward osmotic pressure power generation. For example, the overall efficiency being 3 means the net energy is 3 times larger than the consumption energy.

[Table 3]

Cylindrical Body Diameter 9 Inch
L = 0.5 m

Table 3. $\eta_{all}$ for 9 Inch Diameter and L = 0.5 m

| $di \diagdown J \left( \frac{rate}{to\ J_0} \right)$ | 0.1 | 0.5 | 1 | 1.5 | 2 | 2.5 | 3 |
|---|---|---|---|---|---|---|---|
| 50 | -0.37945 | 0.716485 | 1.061041 | 0.888566 | 0.631998 | 0.404132 | 0.219663 |
| 70 | -0.47188 | 0.534798 | 1.405177 | 1.803952 | 1.877579 | 1.781958 | 1.616068 |
| 90 | -0.52793 | 0.315553 | 1.230009 | 1.917013 | 2.364482 | 2.607023 | 2.696403 |
| 110 | -0.56511 | 0.146938 | 0.98011 | 1.710367 | 2.311969 | 2.777302 | 3.113179 |
| 130 | -0.59151 | 0.021047 | 0.76059 | 1.450783 | 2.074472 | 2.620337 | 3.083 |
| 150 | -0.6112 | -0.07489 | 0.582207 | 1.213776 | 1.809712 | 2.361839 | 2.864192 |
| 170 | -0.62644 | -0.14994 | 0.438367 | 1.012519 | 1.566564 | 2.095244 | 2.594139 |
| 190 | -0.63859 | -0.21009 | 0.321238 | 0.844236 | 1.355297 | 1.851086 | 2.328604 |
| 210 | -0.6485 | -0.2593 | 0.224527 | 0.703205 | 1.174469 | 1.636167 | 2.086299 |

[Table 4]

Cylindrical Body Diameter 9 Inch
L = 1 m

Table 4. $n_{all}$ for 9 Inch Diameter and L = 1 m

| $di \diagdown J \left( \frac{rate}{to\ J_0} \right)$ | 0.1 | 0.5 | 1 | 1.5 | 2 | 2.5 | 3 |
|---|---|---|---|---|---|---|---|
| 50 | -0.07054 | 0.390997 | -0.08726 | -0.35577 | -0.50736 | -0.60255 | -0.6674 |
| 70 | -0.211 | 1.003721 | 0.917678 | 0.545427 | 0.249649 | 0.036593 | -0.11888 |
| 90 | -0.31417 | 1.054322 | 1.644541 | 1.536974 | 1.252181 | 0.969113 | 0.72772 |
| 110 | -0.386 | 0.902646 | 1.892223 | 2.222487 | 2.178098 | 1.980206 | 1.740403 |
| 130 | -0.43789 | 0.723571 | 1.844861 | 2.50485 | 2.779856 | 2.804552 | 2.691394 |
| 150 | -0.47688 | 0.562967 | 1.682335 | 2.51016 | 3.035861 | 3.308432 | 3.396178 |
| 170 | -0.50719 | 0.427609 | 1.493082 | 2.378075 | 3.050792 | 3.515872 | 3.800958 |
| 190 | -0.53139 | 0.314847 | 1.311005 | 2.194089 | 2.933661 | 3.518542 | 3.953555 |
| 210 | -0.55116 | 0.220532 | 1.146637 | 2.000174 | 2.757175 | 3.403455 | 3.934294 |

[Table 5]

Cylindrical Body Diameter 9 Inch
L = 1.5 m

Table 5. $\eta_{all}$ for 9 Inch Diameter and L = 1.5 m

| $di \setminus J \left(\begin{smallmatrix} rate \\ to\ J_0 \end{smallmatrix}\right)$ | 0.1 | 0.5 | 1 | 1.5 | 2 | 2.5 | 3 |
|---|---|---|---|---|---|---|---|
| 50 | 0.095828 | -0.19737 | -0.56228 | -0.70405 | -0.77717 | -0.8215 | -0.85119 |
| 70 | 0.011743 | 0.629237 | 0.096627 | -0.22041 | -0.40212 | -0.51695 | -0.59541 |
| 90 | -0.11298 | 1.164477 | 0.931219 | 0.509342 | 0.203697 | -0.00855 | -0.16061 |
| 110 | -0.21194 | 1.307992 | 1.648882 | 1.347299 | 0.99053 | 0.694386 | 0.462412 |
| 130 | -0.28661 | 1.239952 | 2.070123 | 2.088741 | 1.825996 | 1.517642 | 1.235763 |
| 150 | -0.34378 | 1.099249 | 2.215555 | 2.596381 | 2.5554 | 2.339419 | 2.074172 |
| 170 | -0.38862 | 0.947112 | 2.186516 | 2.85466 | 3.079948 | 3.040942 | 2.870403 |
| 190 | -0.42461 | 0.804989 | 2.070024 | 2.921595 | 3.383284 | 3.553007 | 3.534263 |
| 210 | -0.45407 | 0.678582 | 1.918725 | 2.867653 | 3.503681 | 3.866098 | 4.019171 |

[Table 6]

Cylindrical Body Diameter 9 Inch

L = 2 m

Table 6. $\eta_{all}$ for 9 Inch Diameter and L = 2 m

| $di \setminus J \left(\begin{smallmatrix} rate \\ to\ J_0 \end{smallmatrix}\right)$ | 0.1 | 0.5 | 1 | 1.5 | 2 | 2.5 | 3 |
|---|---|---|---|---|---|---|---|
| 50 | 0.092958 | -0.51487 | -0.74961 | -0.83247 | -0.87429 | -0.89945 | -0.91624 |
| 70 | 0.16823 | 0.150267 | -0.3385 | -0.54756 | -0.65792 | -0.72544 | -0.77086 |
| 90 | 0.064169 | 0.851964 | 0.287302 | -0.07643 | -0.28911 | -0.42462 | -0.51759 |
| 110 | -0.04777 | 1.307369 | 1.01664 | 0.562872 | 0.241853 | 0.021036 | -0.13642 |
| 130 | -0.13995 | 1.475156 | 1.675842 | 1.2893 | 0.905937 | 0.605954 | 0.377732 |
| 150 | -0.21307 | 1.459349 | 2.140453 | 1.984591 | 1.633681 | 1.294339 | 1.008591 |
| 170 | -0.27139 | 1.358058 | 2.388464 | 2.547225 | 2.334593 | 2.02365 | 1.716585 |
| 190 | -0.31861 | 1.227238 | 2.465206 | 2.93076 | 2.92927 | 2.720481 | 2.444775 |
| 210 | -0.35749 | 1.093057 | 2.430921 | 3.142194 | 3.373347 | 3.321863 | 3.132023 |

For each curve in FIGS. 10 to 13, a ratio (di/L) between the inner diameter di and the length L of the hollow fiber forward osmosis membrane, which results in the maximum value of the overall efficiency $\eta_{all}$ when the bundle of hollow fiber forward osmosis membranes is inserted in the 9 inch diameter cylindrical body, is shown only with effective number in Table 7.

[Table 7]

Table 7. Ratio between di and L (di/L) at Each Maximum Value for 9 Inch Diameter

| $L \setminus J \left(\begin{smallmatrix} rate \\ to\ J_0 \end{smallmatrix}\right)$ | 0.1 | 0.5 | 1 | 1.5 | 2 | 2.5 | 3 |
|---|---|---|---|---|---|---|---|
| 0.5 | | | 144 | 166 | 190 | 220 | 234 |
| 1 | | 80 | 119 | 140 | 160 | 176 | 195 |
| 1.5 | 33.33333 | 70 | 103.3333 | 125.3333 | | | |
| 2 | 35 | 66.5 | 94 | | | | |

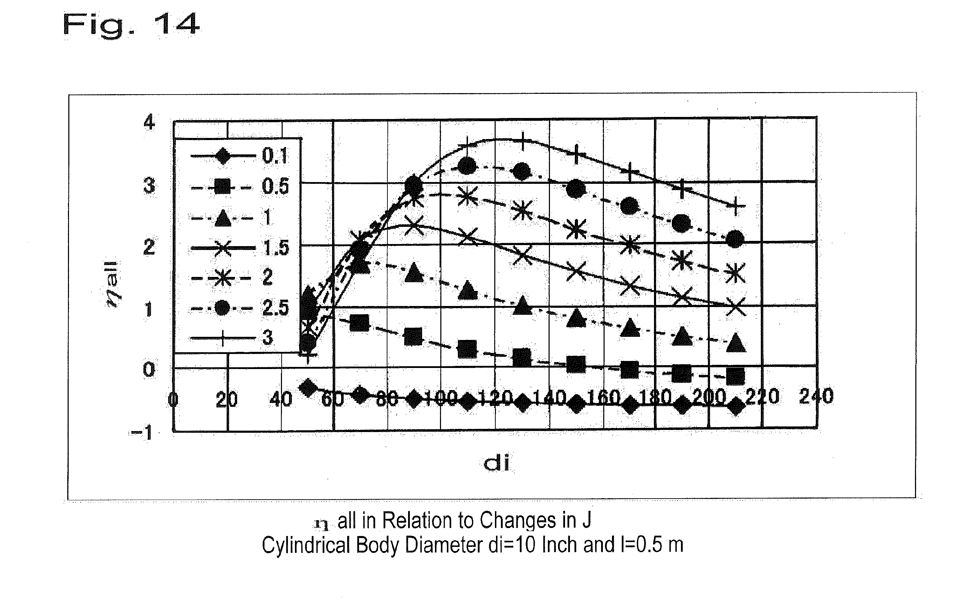

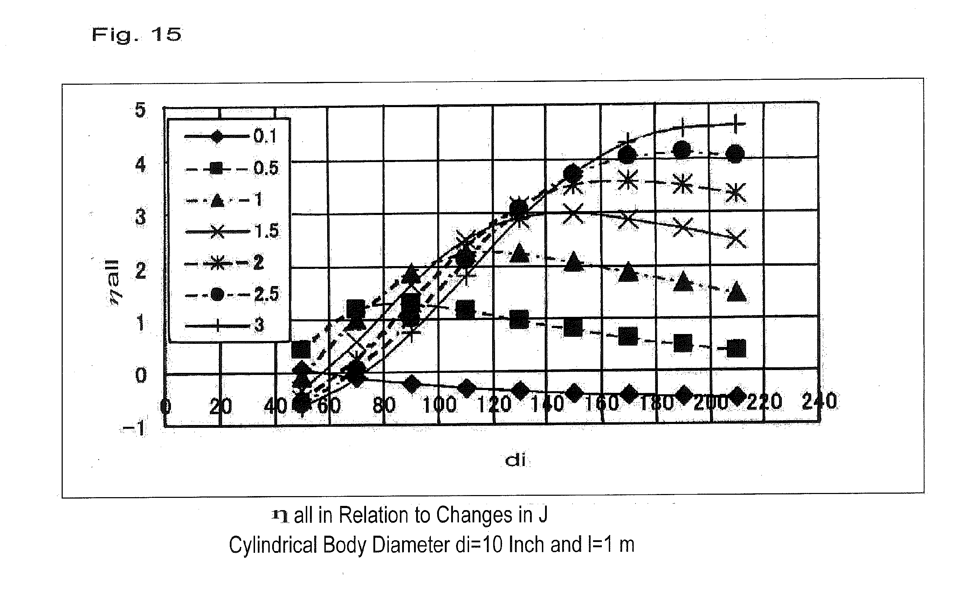

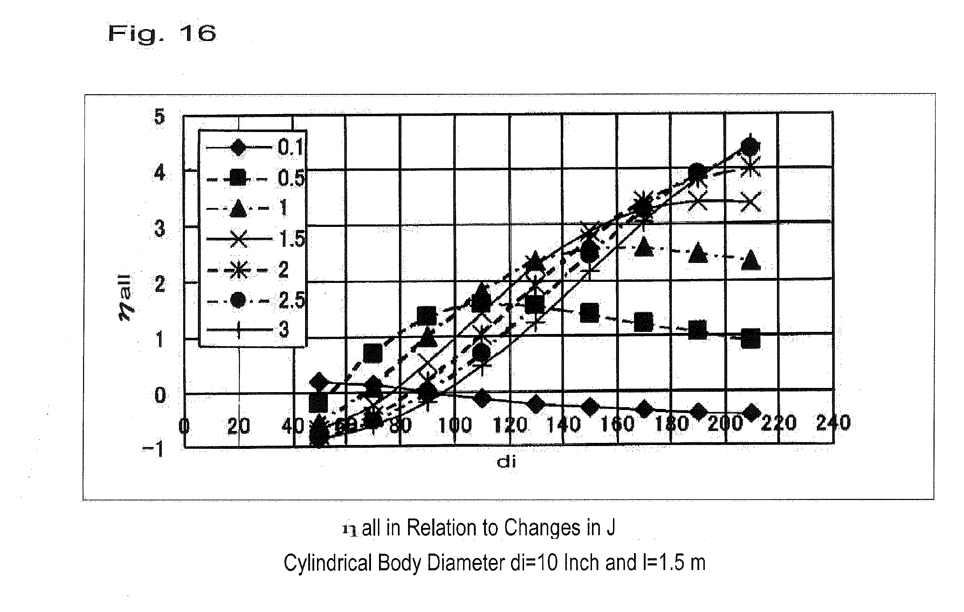

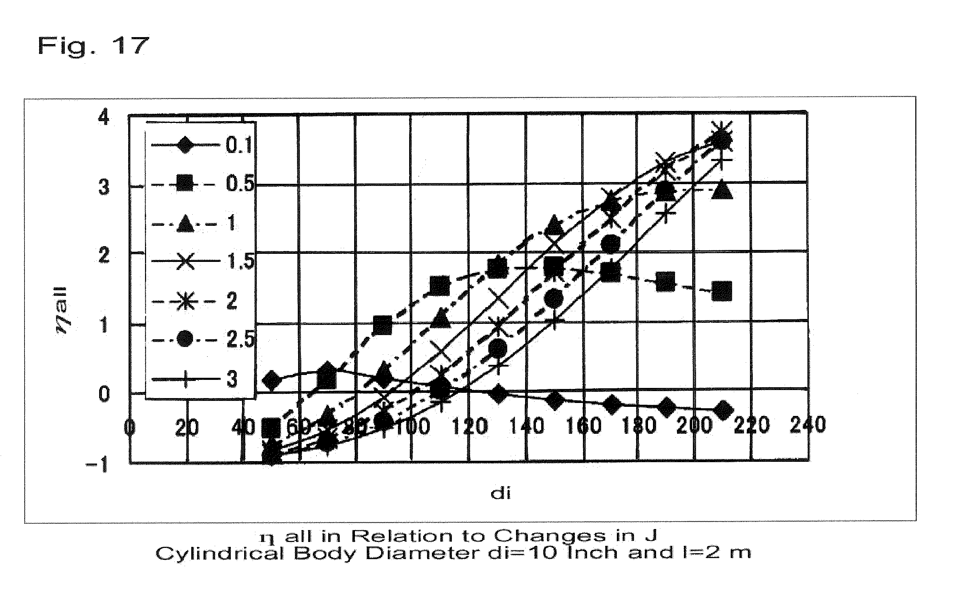

Next, the overall efficiency $\eta_{all}$ when a bundle of hollow fiber forward osmosis membranes are inserted into a 10 inch diameter cylindrical body is shown in Tables 8 to 11 and FIGS. 14 to 17.

[Table 8]

Cylindrical Body Diameter 10 Inch
L = 0.5 m

Table 8. $\eta_{all}$ for 10 Inch Diameter and L = 0.5 m

| $di \diagdown J \left(\frac{rate}{to\ J_0}\right)$ | 0.1 | 0.5 | 1 | 1.5 | 2 | 2.5 | 3 |
|---|---|---|---|---|---|---|---|
| 50 | -0.32308 | 0.917997 | 1.203178 | 0.956676 | 0.66138 | 0.41514 | 0.221821 |
| 70 | -0.43235 | 0.74676 | 1.700747 | 2.069595 | 2.07753 | 1.921332 | 1.709959 |
| 90 | -0.49885 | 0.497989 | 1.551169 | 2.30079 | 2.74793 | 2.953174 | 2.990579 |
| 110 | -0.54302 | 0.30104 | 1.276948 | 2.111365 | 2.773724 | 3.260535 | 3.587702 |
| 130 | -0.57438 | 0.152625 | 1.0249 | 1.828475 | 2.540721 | 3.148295 | 3.646826 |
| 150 | -0.59777 | 0.039101 | 0.816648 | 1.558473 | 2.250734 | 2.882766 | 3.447416 |
| 170 | -0.61589 | -0.04987 | 0.647442 | 1.324907 | 1.974226 | 2.588264 | 3.161257 |
| 190 | -0.63032 | -0.12124 | 0.509119 | 1.127795 | 1.729709 | 2.310245 | 2.865347 |
| 210 | -0.6421 | -0.17967 | 0.394656 | 0.961759 | 1.518432 | 2.061669 | 2.588709 |

[Table 9]

Cylindrical Body Diameter 10 Inch
L = 1 m

Table 9. $\eta_{all}$ for 10 Inch Diameter and L = 1 m

| $di \diagdown J \left(\frac{rate}{to\ J_0}\right)$ | 0.1 | 0.5 | 1 | 1.5 | 2 | 2.5 | 3 |
|---|---|---|---|---|---|---|---|
| 50 | 0.034359 | 0.442055 | -0.08576 | -0.36016 | -0.51217 | -0.60694 | -0.67127 |
| 70 | -0.1245 | 1.192945 | 0.989919 | 0.5659 | 0.252668 | 0.033451 | -0.12423 |
| 90 | -0.24548 | 1.316922 | 1.86037 | 1.654992 | 1.310441 | 0.996181 | 0.738611 |
| 110 | -0.33041 | 1.171489 | 2.226623 | 2.48931 | 2.359257 | 2.095919 | 1.812382 |
| 130 | -0.39192 | 0.974127 | 2.232036 | 2.898428 | 3.11281 | 3.061931 | 2.881707 |
| 150 | -0.43821 | 0.790209 | 2.076692 | 2.974908 | 3.493666 | 3.71618 | 3.738528 |
| 170 | -0.4742 | 0.632669 | 1.872988 | 2.867553 | 3.584125 | 4.041993 | 4.287852 |
| 190 | -0.50295 | 0.500355 | 1.668439 | 2.680508 | 3.499647 | 4.118016 | 4.54974 |
| 210 | -0.52643 | 0.389191 | 1.479864 | 2.469612 | 3.327407 | 4.037576 | 4.598428 |

[Table 10]

Cylindrical Body Diameter 10 Inch
L = 1.5 m

Table 10. $\eta_{all}$ for 10 Inch Diameter and L = 1.5 m

| $di \diagdown J \left(\frac{rate}{to\ J_0}\right)$ | 0.1 | 0.5 | 1 | 1.5 | 2 | 2.5 | 3 |
|---|---|---|---|---|---|---|---|
| 50 | 0.205429 | -0.19512 | -0.5666 | -0.70758 | -0.77995 | -0.82376 | -0.85307 |
| 70 | 0.131772 | 0.697675 | 0.101065 | -0.2247 | -0.40745 | -0.52198 | -0.59994 |
| 90 | -0.00918 | 1.351131 | 0.989227 | 0.522331 | 0.203154 | -0.01341 | -0.16678 |
| 110 | -0.12463 | 1.579824 | 1.815274 | 1.419406 | 1.018862 | 0.703292 | 0.462391 |
| 130 | -0.21263 | 1.543291 | 2.357658 | 2.266591 | 1.923795 | 1.569145 | 1.26147 |
| 150 | -0.28027 | 1.401749 | 2.593159 | 2.89925 | 2.762134 | 2.47221 | 2.157311 |
| 170 | -0.33342 | 1.234921 | 2.612575 | 3.266862 | 3.412676 | 3.287815 | 3.046564 |
| 190 | -0.37612 | 1.073685 | 2.512539 | 3.409659 | 3.831603 | 3.926673 | 3.829721 |
| 210 | -0.4111 | 0.927798 | 2.358166 | 3.398099 | 4.040437 | 4.357095 | 4.44185 |

[Table 11]

Cylindrical Body Diameter 10 Inch
L = 2 m

Table 11. $\eta_{all}$ for 10 Inch Diameter and L = 2 m

| $di \diagdown J \left(\genfrac{}{}{0pt}{}{rate}{to\ J_0}\right)$ | 0.1 | 0.5 | 1 | 1.5 | 2 | 2.5 | 3 |
|---|---|---|---|---|---|---|---|
| 50 | 0.172687 | -0.51867 | -0.75272 | -0.83462 | -0.87591 | -0.90074 | -0.9173 |
| 70 | 0.300325 | 0.165872 | -0.34279 | -0.55225 | -0.66188 | -0.72875 | -0.77366 |
| 90 | 0.194524 | 0.941041 | 0.29613 | -0.08014 | -0.29481 | -0.43026 | -0.52278 |
| 110 | 0.067657 | 1.501349 | 1.073273 | 0.574588 | 0.240498 | 0.015635 | -0.14298 |
| 130 | -0.03962 | 1.752161 | 1.821013 | 1.345084 | 0.924741 | 0.609486 | 0.374667 |
| 150 | -0.12557 | 1.779108 | 2.393551 | 2.119374 | 1.699004 | 1.324158 | 1.020227 |
| 170 | -0.19445 | 1.689869 | 2.738705 | 2.786058 | 2.477075 | 2.10496 | 1.761609 |
| 190 | -0.25036 | 1.553795 | 2.884855 | 3.278027 | 3.172882 | 2.880762 | 2.547492 |
| 210 | -0.29645 | 1.406167 | 2.890838 | 3.583593 | 3.72708 | 3.582752 | 3.317266 |

For each curve in FIGS. 14 to 17, a ratio (di/L) between the inner diameter di and the length L of the hollow fiber forward osmosis membrane, which results in the maximum value of the overall efficiency $\eta_{all}$ when the bundle of hollow fiber forward osmosis membranes is inserted in the 10 inch diameter cylindrical body, is shown only with effective number in Table 12.

[Table 12]

Table 12. Ratio between di and L (di/L) at Each Maximum Value for 10 Inch Diameter

| $L \diagdown J \left(\genfrac{}{}{0pt}{}{rate}{to\ J_0}\right)$ | 0.1 | 0.5 | 1 | 1.5 | 2 | 2.5 | 3 |
|---|---|---|---|---|---|---|---|
| 0.5 | | | 100 | 148 | 178 | 200 | 224 | 244 |
| 1 | 50 | 85 | 117 | 148 | 171 | 188 | 205 |
| 1.5 | 33.33333 | 78.66667 | 110 | 128.6667 | | | |
| 2 | 35 | 74 | 100 | | | | |

According to Tables 7 and 12, an equation that makes the optimal inner diameter (which results in the "maximum efficiency") of the hollow fiber forward osmosis membrane converge to a constant value is expressed by [Equation 1]. Wherein the inner diameter changes from 50 $\mu$m and 200$\mu$ m, the length L of the hollow fiber forward osmosis membrane from 0.5 m to 2 m and the permeation flux rate J from $J_0$ to $2J_0$ ($J_0 = 3.42 \times 10^{-7}$ m/s at 3 MPa).
Here, the inner diameter d is measured in $\mu$m, and the length L is measured in m.

$$d = 50\ to\ 200\ \mu m$$

$$L = 0.5\ to\ 2\ m$$

$$J = 3.42 \times 10^{-7}\ to\ 6.84 \times 10^{-7}\ m/s$$

[Equation 1]

$$\frac{d}{L^{0.75} \cdot J^{0.5}} = 1.9 \times 10^5 \sim 2.2 \times 10^5$$

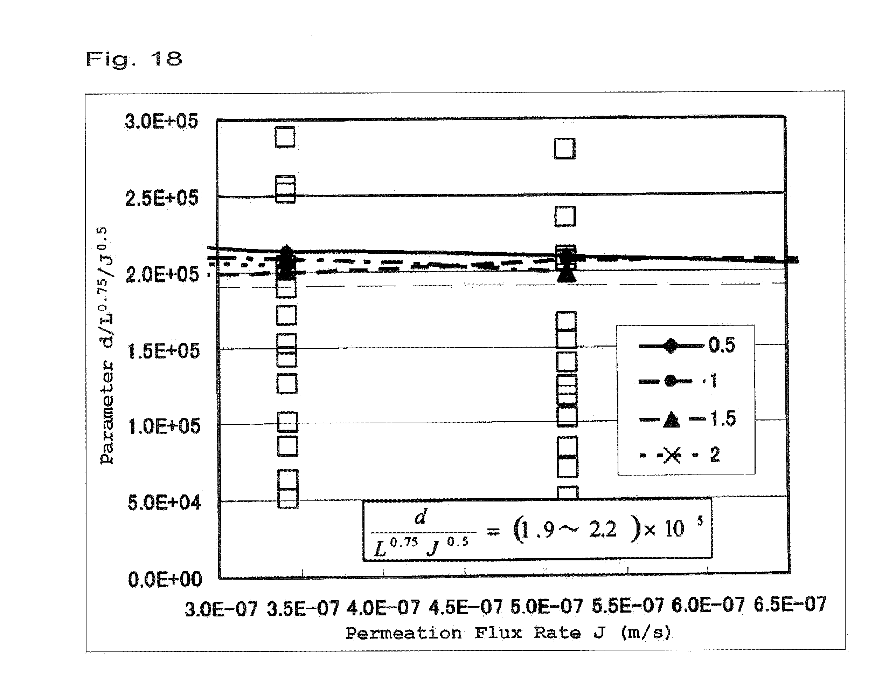

FIG. 18 shows the parameter $d/(L^{0.75} \cdot J^{0.5})$ when the length L in [Equation 1] is specified in the range of L = 0.5 to 2 m, similar to the specified range, it is evident that the parameter falls within the range.

<Second Embodiment>

The description hereinafter is directed to how the relationship of optimal conditions for a hollow fiber forward osmosis membrane according to the present invention has been acquired.

In view of forward osmotic pressure power generation using a hollow fiber forward osmosis membrane, the presently employed hollow fiber type reverse osmosis membrane is insufficient to achieve an optimal situation. The inventor of the present invention has found optimal membrane conditions for forward osmotic pressure power generation by conducting following evaluations.

(1) Optimal Thickness in Relation to Inner Diameter of Hollow Fiber Forward Osmosis Membrane

The hollow fiber osmosis membrane for reverse osmosis is used at a pressure of 8 MPa, while, on the other hand, the hollow fiber osmosis membrane for forward osmosis power generation is used at a pressure of 1.5 MPa, which is less than one fourth of the pressure in the case of the reverse osmosis. Accordingly, it appears possible to reduce the thickness of the hollow fiber forward osmosis membrane. The inventor of the present invention thought that great effect could be expected if the thickness of the membrane were reduced since concentration polarization within the membrane could be suppressed.

(2) Calculation of System Efficiency

As described in the above, in order to acquire optimal parameters for forward osmotic pressure power generation, it is required to calculate the system efficiency. By calculating the system efficiency, it becomes possible to practically evaluate the forward osmotic pressure power generation.

(3) Theoretical Calculation of Variation of Permeation Flux Rate per Element in Relation to Variation of Inner Diameter of Hollow Fiber Forward Osmosis Membrane

In the case of the hollow fiber type reverse osmosis membrane, freshwater comes into the hollow fiber osmosis membrane as a result of high pressure on the side of saline water. On the other hand, in the case of the forward osmotic pressure power generation, since freshwater flowing in the hollow fiber osmosis membrane permeates on the side of seawater, the freshwater may completely permeates before reaching the end of the hollow fiber osmosis membrane, depending upon the amount of the flowing freshwater. On the other hand, if a sufficient amount of freshwater flows in the hollow fiber osmosis membrane, this results in a heavy loss in the view of power generation efficiency. Accordingly, it is required to find out optimal flowing conditions on the side of freshwater of the hollow fiber osmosis membrane in the forward osmotic pressure power generation.

(4) On the bases of the aforementioned evaluations, optimal parameter conditions have been acquired for the hollow fiber forward osmosis membrane.

(1) Optimal Thickness in Relation to Inner Diameter of Hollow Fiber Forward Osmosis Membrane

Currently, the hollow fiber osmosis membrane for reverse osmosis is employed. This kind of hollow fiber forward osmosis membrane is designed to have a thickness sufficient not to break even under a pressure of 8 MPa. On the other hand, in the forward osmotic pressure power generation, experiments so far show that an optimal pressure is 1.5 MPa, i.e., less than one fourth is sufficient for pressure resistance. The optimal thickness in this case has been calculated as follows.

1) Theoretical calculation of a stress generated in the hollow fiber forward osmosis membrane.
2) Evaluation test of a yield stress of the hollow fiber forward osmosis membrane.
3) Calculation of an optimal thickness for use in the forward osmotic pressure power generation based on safety factor.

1) Theoretical Calculation of Stress Generated in Hollow Fiber Forward Osmosis Membrane

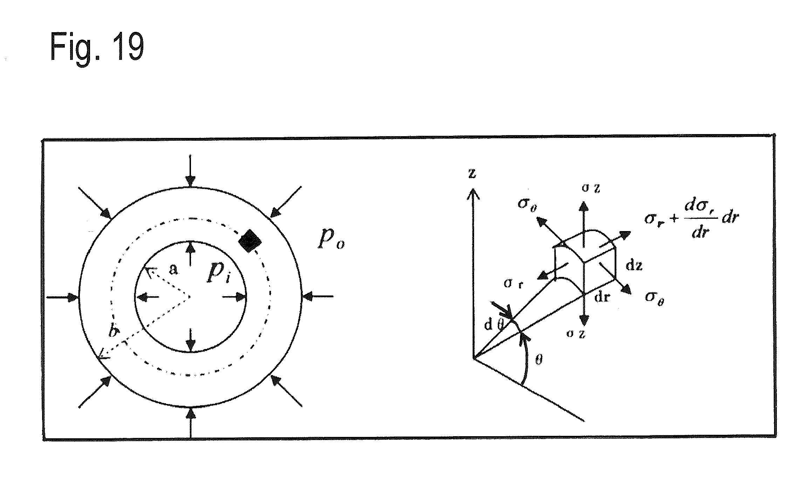

A stress in a circumferential direction generated by internal and external pressures exerted on the hollow fiber forward osmosis membrane shown in FIG. 19 can be expressed by the following [Equation 12].

[Equation 12]

$$\sigma_r = \frac{1}{b^2 - a^2}\left\{ P_i \cdot a^2 \left(1 - \frac{b^2}{r^2}\right) - P_o \cdot b^2 \left(1 - \frac{a^2}{r^2}\right) \right\}$$

$$\sigma_\theta = \frac{1}{b^2 - a^2}\left\{ P_i \cdot a^2 \left(1 + \frac{b^2}{r^2}\right) - P_o \cdot b^2 \left(1 + \frac{a^2}{r^2}\right) \right\} \quad \cdot \cdot \cdot (11)$$

$$\sigma_z = 2\upsilon \frac{P_i \cdot a^2 - P_o \cdot b^2}{b^2 - a^2} + E\varepsilon_z = \upsilon(\sigma_r + \sigma_z) + E\varepsilon_z$$

wherein $P_o$ denotes an external pressure, $P_i$ denotes an internal pressure, a denotes an inner radius, b denotes an outer radius, $\sigma_r$ denotes a stress in a radial direction, $\sigma_\theta$ denotes a stress in a circumferential direction, and $\sigma_z$ denotes a stress in an axial direction (see Saimoto, A., Hirano, T., Imai, Y. "Material Mechanics" pp. 108-110).

Since both ends of the hollow fiber forward osmosis membrane can be assumed to be open in this case, $\sigma_z = 0$. Furthermore, owing to the condition $P_o \gg P_i$, $|\sigma_r| < |\sigma_\theta|$. Accordingly, $\sigma_\theta$ is the maximum stress in the hollow fiber forward osmosis membrane.

2) Evaluation Test of Yield Stress of Hollow Fiber Forward Osmosis Membrane

In order to prevent plastic deformation against the above described stress, an appropriate thickness is required. Therefore, an experiment has been conducted to calculate a yield point, and the optimal thickness has been considered in view of the yield point.

Method of Experiment

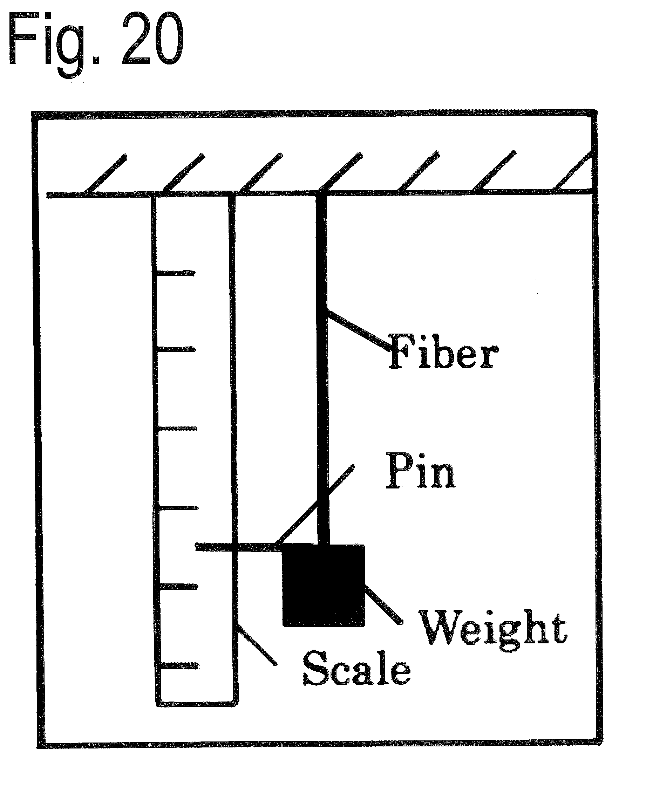

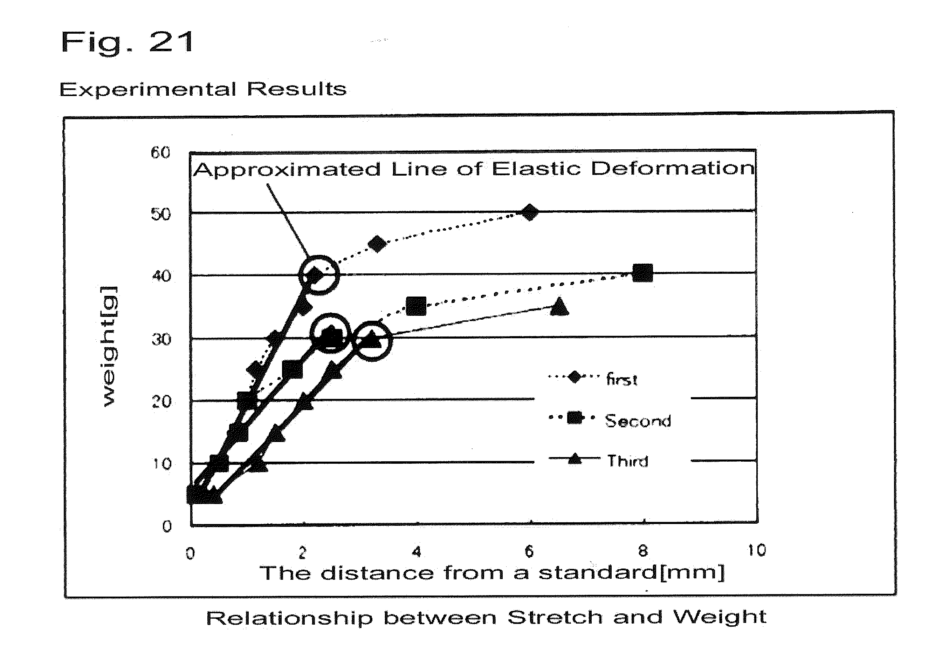

The yield stress has been acquired by conducting a tensile test as shown in FIG. 20. As an original point, a position at which the pin was placed when no weight was hung was marked on the scale. Firstly, a weight of 5 g was hung, and the distance the pin moved from the original point was measured on the scale. Then, the weight was removed, and it was checked whether or not the pin returned to the original point. In this manner, similar measurements were subsequently conducted with weights of 10g, 15g, ..., 40g, in ascending order of weight so as to ascertain a weight from which the plastic deformation begins to occur. Such experiments were repeated three times. The result of the experiments (relationship between stretch and weight) is shown in a graph of FIG. 21.

It is assumed that the plastic deformation begins to occur at the weight where a slope of the graph remarkably changes. Since, the second and third experiments showed the similar results in FIG. 3, it is determined that the plastic deformation begins at a weight of 30 g. Denoting a cross section area as A and a weight as F, the yield stress is calculated from the following equation [Equation 3]. This indicates that the value is approximately the same as that of nylon.

[Equation 13]

Yield stress $\sigma_y$ is expressed as follows.

$$\sigma_y = \frac{F}{A} = \frac{30 \cdot 10^{-3} \cdot 9.8}{\frac{\pi}{4}(d_o^2 - d_i^2)} = 35.7 [\text{MPa}] \quad \cdot \cdot \cdot (12)$$

(nylon $\sigma_y$ = 40[MPa])

3) Calculation of Optimal Thickness for Use in Forward Osmotic Pressure Power Generation Based on Safety Factor

The currently employed hollow fiber forward osmosis membrane is designed to have a thickness sufficient not to break even under a pressure of 8 MPa. A theoretical radius a of the hollow fiber forward osmosis membrane is calculated as follows:

Firstly, as the actual hollow fiber forward osmosis membrane specifications, the values of the outer radius b = 55[μm], the external pressure Po = 8 [MPa], and the internal pressure Pi = 20[kPa] are assigned to the term of theoretical stress $\sigma_\theta$ of the hollow fiber forward osmosis membrane in Equation (11). Then, assuming that the maximum stress position r = a, and using the yield stress $\sigma_y$ calculated as a result of Equation (12), in view of $\sigma_\theta < \sigma_y$, which is a condition for preventing the hollow fiber forward osmosis membrane from breaking, the theoretical radius a is acquired as 40μm. Accordingly, a theoretical thickness is acquired as follows.

$$t' = b - a = 55 - 40 = 15[\mu m].$$

However, the actual thickness is made thicker than the theoretical thickness in view of safety factor. Using the actual thickness t = 35[μm], the safety factor is acquired as follows.

$$s = 35 / 15 = 2.333... = 2.5$$

Since the external pressure applied to the hollow fiber forward osmosis membrane is approximately 1.5 MPa in an actual environment, using a condition of the external pressure = 1.5 MPa and the safety factor as acquired in the above, a thickness to which the safety factor is applied is estimated.

Equation (11) is calculated in a similar way, by merely changing the external pressure Po = 1.5 Mpa in Equation (11), a theoretical inner radius a = 52.5[μm] is acquired. As a result of this, thickness t' = 55 - 52.5 = 2.5[μm] is acquired. In view of the safety factor, the thickness t is acquired as follows (outer radius standard).

$$t = s \cdot t' = 2.5 \times 2.5 = 62.5[\mu m]$$

Based on the above results, a relationship between thickness and inner diameter in view of the safety factor is acquired as follows.

$$t = 0.048 di + 0.98 \times 10^{-6} \cdot \cdot \cdot \cdot \cdot (13)$$

The thickness is expressed as follows.

$$do - di = 2t \cdot \cdot \cdot \cdot \cdot \cdot \cdot (14)$$

di is acquired from Equation (13),

$$di = (do - 1.96 \times 10^{-6}) / 1.096 \cdot \cdot \cdot (15)$$

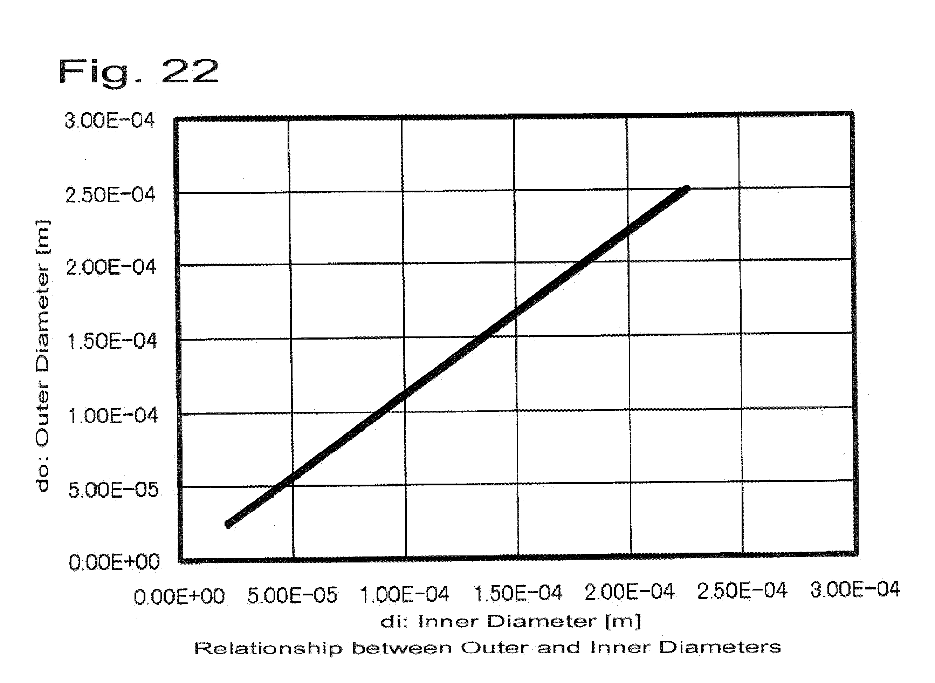

From equation (15), a relationship between outer and inner diameters is acquired, which is shown in FIG. 22.

(2) Calculation of System Efficiency

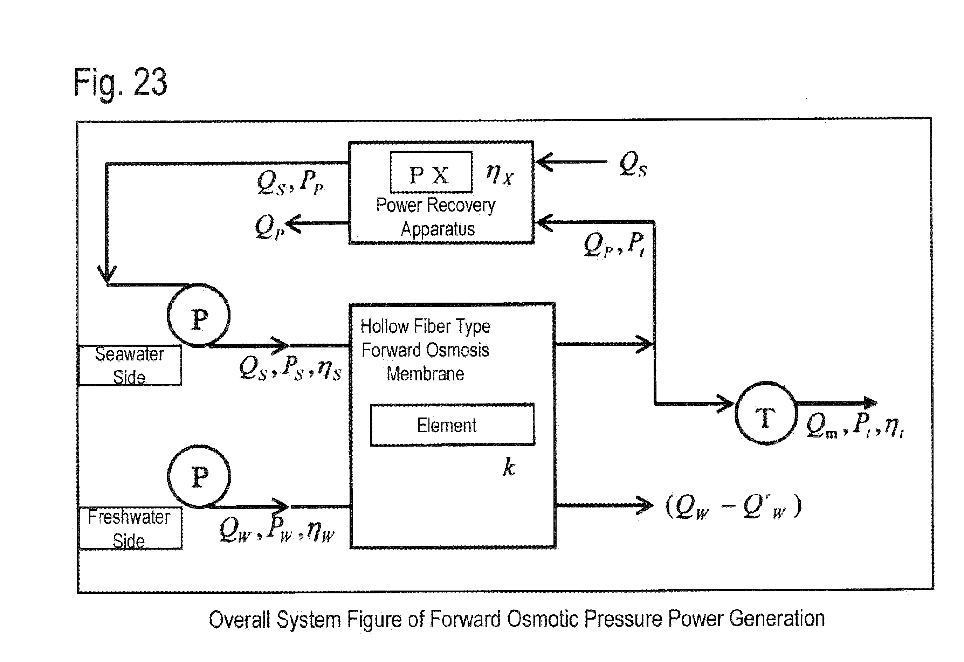

Here, instead of efficiency of a single hollow fiber forward osmosis membrane, efficiency of the entire forward osmotic pressure power generation system shown in FIG. 23 is considered. The explanation of reference numerals in FIG. 23 is shown in [Equation 14]. The calculation of system efficiency is shown in [Equation 15] and [Equation 16]. The power recovery apparatus in [Equation 15] is denoted by "PX" in FIG. 23.

[Equation 14]

Seawater side pump power: Es

Freshwater side pump power: Ew

Seawater side pump efficiency: $\eta_s$

Freshwater side pump efficiency: $\eta_w$

Seawater side pump pressure: Ps

Freshwater side pump pressure: Pw

Seawater side pump compression flow rate: Qs

Freshwater side pump compression flow rate: Qw

Turbine flow rate: Qm

Permeation flux rate: Q'w

Turbine output: Et

Turbine efficiency: $\eta_t$

Power recovery apparatus efficiency: $\eta_x$

Power recovery apparatus outlet pressure: Pp

[Equation 15]

Output

$$E_t = \eta_t \cdot P_t \cdot Q_m$$

Power

$$E_s = \frac{(P_s - P_p)Q_s}{\eta_s}$$

$$E_w = \frac{P_w \cdot Q_w}{\eta_w}$$

Flow rate

$$Q_m = (Q_s + Q'_w) - Q_p$$

Loss in a unit

$$P_t = kP_s$$

The net output calculated from the above equations is expressed as follows.

$$E_n = E_t - (E_s + E_w)$$

$$= \eta_t \cdot P_t \cdot Q_m - \left( \frac{(P_s - P_p)Q_s}{\eta_s} + \frac{P_w \cdot Q_w}{\eta_w} \right)$$

$$= \eta_t \cdot kP_s(Q_s + Q'_w - Q_p) - \left( \frac{(P_s - P_p)Q_s}{\eta_s} + \frac{P_w \cdot Q_w}{\eta_w} \right)$$

Since the following conditions are required in the power recovery apparatus,

$$Q_p = hQ_s \ (h \cong 1),$$

The following condition is required.

$$P_p = \eta_x kP_s$$

Accordingly, it follows that

$$E_n = \eta_t \cdot kP_s(Q'_w + (1 - h)Q_s) - \frac{1 - k\eta_x}{\eta_s} P_s Q_s - \frac{P_w \cdot Q_w}{\eta_w}$$

[Equation 16]

Defining a permeating rate x (1 > x) as a rate of freshwater permeating into seawater, a flow rate between inlet and outlet on the freshwater side is expressed as follows.

$$Q'_w = Q_w \cdot x.$$

Defining y (1 » y) as a ratio of freshwater side pressure to seawater side pressure, Pw / Ps = y follows.
Defining z (1 > z) as a ratio of freshwater side inlet flow rate to seawater side flow rate,

$$Qw \ / \ Qs = z$$

follows.
Using the above definitions,

$$E_n = k\eta_t P_s\{(1 - h)Q_s + xzQ_s\} - \left( \frac{1 - k\eta_x}{\eta_s} P_s Q_s + \frac{yz}{\eta_w} P_s Q_s \right)$$

$$= \left\{ k\eta_t(1 - h) + k\eta_t xz - \frac{1 - k\eta_x}{\eta_s} - \frac{yz}{\eta_w} \right\} P_s Q_s$$

Thus, the overall efficiency is expressed as follows.

$$\eta_{all} = \frac{E_n}{E_s + E_w} = \frac{\left\{k\eta_t(1-h) + k\eta_t xz - \frac{1-k\eta_x}{\eta_s} - \frac{yz}{\eta_w}\right\} P_s Q_s}{\left(\frac{1-k\eta_x}{\eta_s} + \frac{yz}{\eta_w}\right) P_s Q_s} \quad \cdots (16)$$

The overall efficiency $\eta_{all}$ of Equation (16) is acquired by dividing net energy by consumption energy, wherein the net energy is acquired by subtracting consumption energy from output energy. The output energy is energy generated by the forward osmotic pressure power generation. The consumption energy is energy consumed for operating the forward osmotic pressure power generation.

(3) Theoretical Calculation of Variation of Permeation Flux Rate per Element in Relation to Variation of Hollow Fiber Forward Osmosis Membrane Inner Diameter

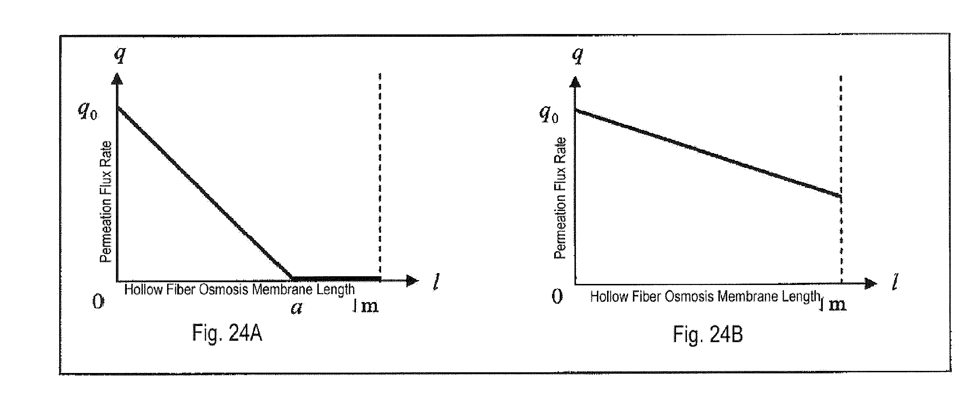

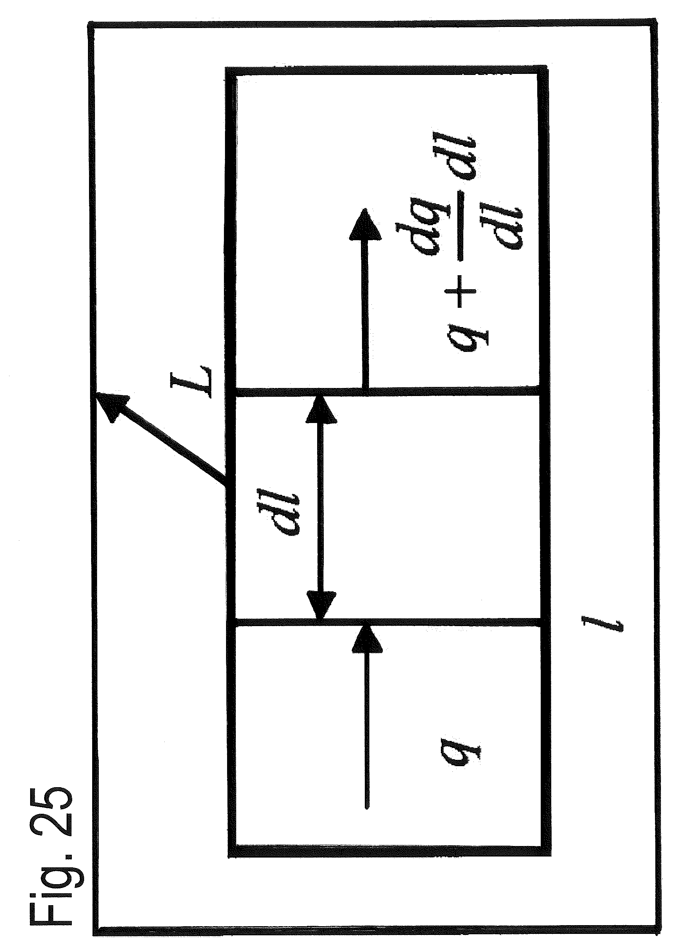

FIG. 24 shows the permeation flux rate per hollow fiber forward osmosis membrane in relation to changes in length. Here, FIG. 24A shows a case in which water completely permeates before reaching the end of the hollow fiber forward osmosis membrane, and FIG. 24B shows a case in which water permeates through the entire hollow fiber forward osmosis membrane (the permeated water is partially returned).
Assuming the length of the hollow fiber forward osmosis membrane to be l m, two cases of FIGS. 24A and 24B are considered. As for the case of FIG. 24A, water permeates before reaching l m. On the other hand, as for the case of FIG. 24B, water permeates through the entire hollow fiber forward osmosis membrane.
[Equation 17] to [Equation 19] show how the case of FIG. 24A in which water completely permeates before reaching the end of the hollow fiber forward osmosis membrane is theoretically calculated with reference to FIG. 25.

[Equation 17]

The linear part of the graph in FIG. 25A can be represented by the following equation.

$$q(l) = -\frac{q_0}{a}l + q_0 \quad \cdots (17)$$

The permeation flux rate L for an infinitesimal length dl is represented as follows.

$$L = J \times dl \times \pi d_i \ [m^3/s]$$

$$q = \left(q + \frac{dq}{dl}dl\right) + L$$

$$0 = \frac{dq}{dl}dl + (J \times dl \times \pi d_i)$$

$$\frac{dq}{dl} = -J \cdot \pi d_i$$

$$q(l) = -J\pi d_i \cdot l + q_0 \quad \cdots (18)$$

(Note: d represents the inner diameter of the hollow fiber forward osmosis membrane)
From Equations (17) and (18),

$$-\frac{q_0}{a} = -\pi d_i J$$

$$\therefore a = \frac{q_0}{\pi d_i J}$$

[Equation 18]

A friction loss $\Delta p$ up to a hollow fiber forward osmosis membrane distance a is acquired as follows: Using a pressure drop head

$$\Delta h = \lambda \ \frac{l}{d_i} \cdot \frac{V^2}{2g},$$

a laminar pipe friction coefficient

$$\lambda = \frac{64}{Re},$$

and the Reynolds number

$$Re = \frac{V \cdot d_i}{\nu},$$

Accordingly, the pressure drop head can be derived as follows.

$$\Delta h = \frac{32 \cdot l \cdot \nu \cdot V}{d_i^2 \ g}$$

Therefore, the pressure drop is expressed as follows.

$$p = \rho g \Delta h = \frac{128 \cdot l \cdot \nu \cdot \rho}{\pi \cdot d_i^4} q \ \left( \because \nu = \frac{q}{\frac{\pi}{4} d_i^2} \right)$$

$$dp = \frac{128 \cdot \nu \cdot \rho}{\pi \cdot d_i^4} q \cdot dl$$

From the above, the following equation is acquired.

$$\Delta p = \int_0^a \frac{128 \cdot \frac{\mu}{\rho} \cdot \rho}{\pi \cdot d_i^4} q \cdot dl = \frac{128\mu}{\pi d_i^4} \int_0^a (-\pi J d_i \cdot l + q_0) dl$$

$$= \frac{128\mu}{\pi d_i^4} \left\{ -\frac{\pi J d_i}{2} a^2 + q_0 a \right\} = \frac{128\mu}{\pi d_i^4} \cdot \frac{q_0^2}{2\pi d_i J} = \frac{64\mu}{\pi^2 d_i^5 J} q_0^2$$

[Equation 19]

Therefore, the permeation flux rate per fiber and the permeation flux rate per entire element are expressed as follows.

$$q_0 = \sqrt{\frac{\pi^2 J d_i^5 \Delta p}{64\mu}} = \frac{\pi d_i^{2.5}}{8}\sqrt{\frac{J\Delta p}{\mu}}$$

$$Q = N \cdot q_0 = \frac{A}{d_0^2}\alpha \cdot \frac{\pi d_i^{2.5}}{8}\sqrt{\frac{J\Delta p}{\mu}} \quad \cdots \quad (19)$$

[Equation 20] shows how the case of FIG. 24B in which water permeates through the entire hollow fiber forward osmosis membrane (the permeated water is partially returned) is theoretically calculated.

[Equation 20]

The permeation flux rate per fiber $q_0$ is a product of an inner surface area $\pi \cdot di \cdot l$ and the permeation flux rate per unit area J, expressed as follows.

$$q_0 = \pi \cdot d_i \cdot L \cdot J$$

From this, the permeation flux rate per element Q is expressed as follows. As will be seen, the permeation flux rate per element Q is dependent merely upon inner and outer diameters.

$$Q = N \cdot q_0 = \frac{A}{d_0^2}\alpha \cdot q_0 = \frac{A}{d_0^2}\alpha \cdot \pi \cdot d_i \cdot L \cdot J \quad \cdots \quad (20)$$

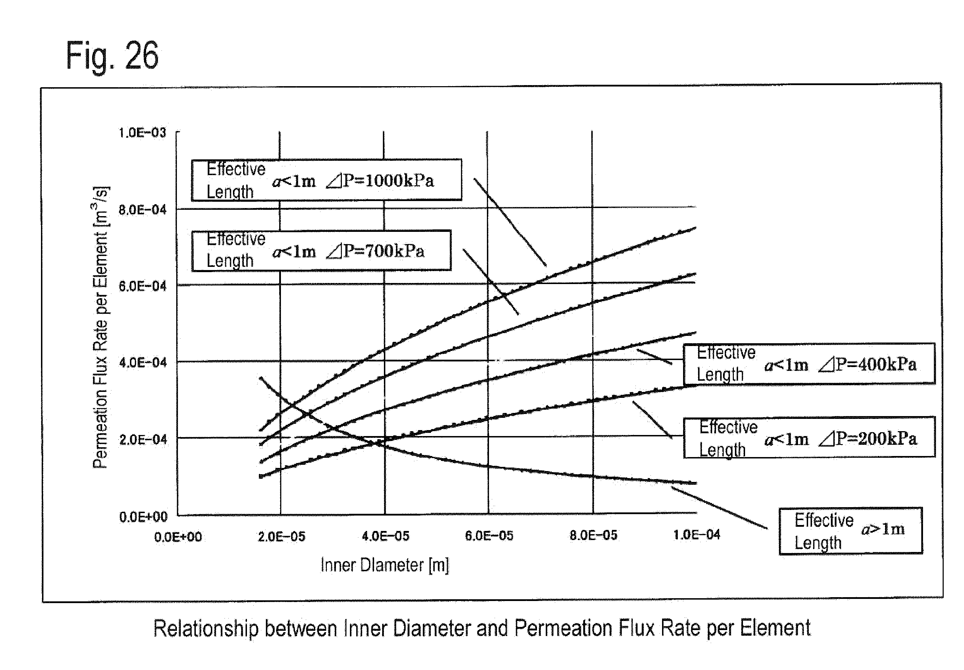

N: the number of hollow fiber forward osmosis membranes per element
A: the cross section area of a module
do: the outer diameter of the hollow fiber forward osmosis membrane
$\alpha$: an effective packing ratio of hollow fiber forward osmosis membranes in the module
di: the inner diameter of the hollow fiber forward osmosis membrane
J: the permeation flux rate per unit area
Substituting J = 1.713 $\times$ 10$^{-7}$ [m/s], which is determined in view of the permeation flux rate in an actual reverse osmosis with reference to Honda, T., "Bulletin of the Society of Sea Water Science, Japan" Vol. 44, No. 6 (1990), into Equations (19) and (20), the graph in FIG. 26 can be drawn (l is assumed to be 1 m).

(4) Optimal Condition Parameter of Hollow Fiber Forward Osmosis Membrane

Using the results of (1) to (3) described above, optimal conditions of the hollow fiber forward osmosis membrane are acquired.
Here, it is assumed as follows.

Unit internal efficiency k = Pt / Ps = 0.95
Efficiency of the power recovery apparatus $\eta_x$ = Pp/Ps = 0.9
Flow rate ratio of the power recovery apparatus h = Qp/Qs = 0.9
Seawater side pump efficiency $\eta_s$ = 0.85
Freshwater side pump efficiency $\eta_w$ = 0.85
Turbine pump efficiency $\eta_t$ = 0.85.

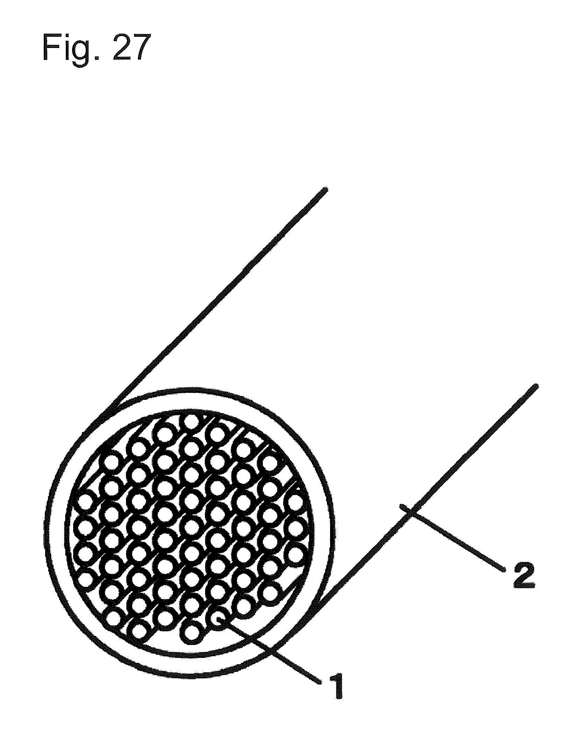

As shown in FIG. 27, it is assumed that a bunch of a plurality of hollow fiber forward osmosis membranes 1 is tightly inserted inside of the cylindrical body 2 of 9 or 10 inch inner diameter. Parameters in both cases of 9 inch and 10 inch are shown in Tables 13 and 14 respectively. The overall efficiency $\eta_{all}$ is acquired from the above described Equation (16) by changing the length of the hollow fiber forward osmosis membrane L and the permeation flux rate per unit area J, under conditions of Tables 13 and 14. As the membrane element of the hollow fiber forward osmosis membrane 1, HD10155EI (product of Toyobo Co., Ltd.) was employed.

[Table 13]

| 9 inch four ports type | |
|---|---|
| Estimated values derived from concentrate seawater data | |
| Pump efficiency $\eta_s$ = | 0.9 |
| $\eta_w$ = | 0.85 |
| Freshwater flow rate Qw = | 5.25 l/min |
| Permeation flux rate Q'w = | 5.25 l/min |
| Returned water = | 0 |
| Freshwater side pressure Pw = | 500 kPa |
| Concentrate seawater flow rate Qs = | 19.69 l/min |
| Concentrate seawater pressure Ps = | 1.5 Mpa |
| Mixed water flow rate Qs+Q'w = | 24.94 l/min |
| Element outlet pressure Pt = | 1.25 Mpa |

[Table 14]

| 10 inch four ports type | |
|---|---|
| Estimated values from concentrate seawater data | |
| Pump efficiency $\eta_s$ = | 0.9 |
| $\eta_w$ = | 0.85 |
| Freshwater flow rate Qw == | 5.5 l/min |
| Permeation flux rate Q'w = | 5.1 l/min |
| Returned water = | 0.4 l/min |
| Freshwater side pressure Pw = | 500 kPa |
| Concentrate seawater flow rate Qs = | 19.76 l/min |
| Concentrate seawater pressure Ps = | 1.5 Mpa |
| Mixed water flow rate Qs+Q'w = | 24.86 l/min |
| Element outlet pressure Pt = | 1.25 Mpa |

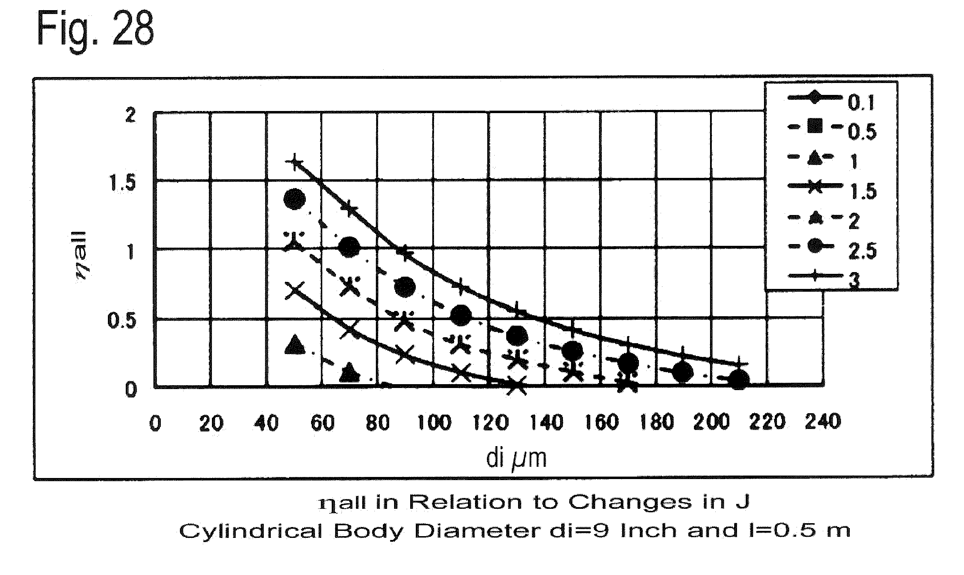

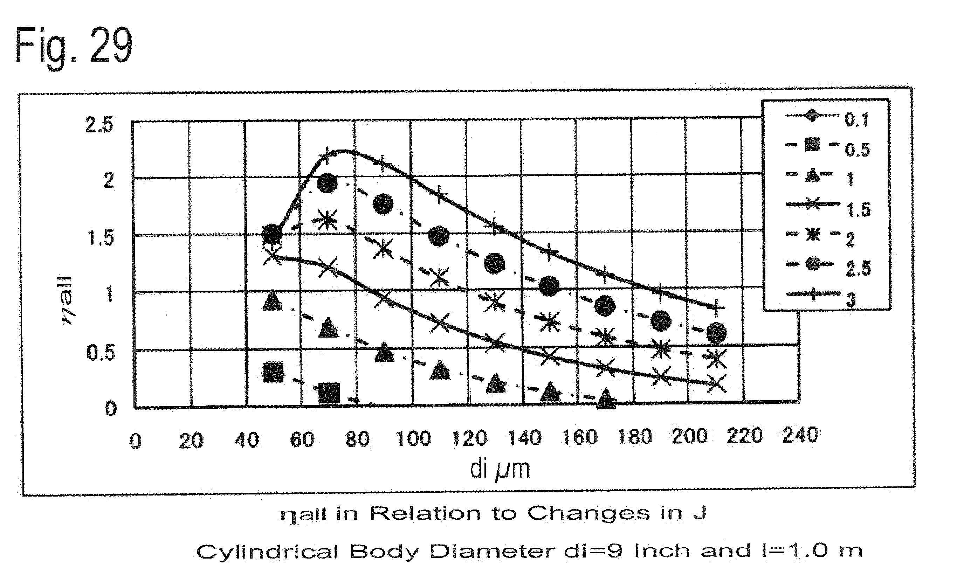

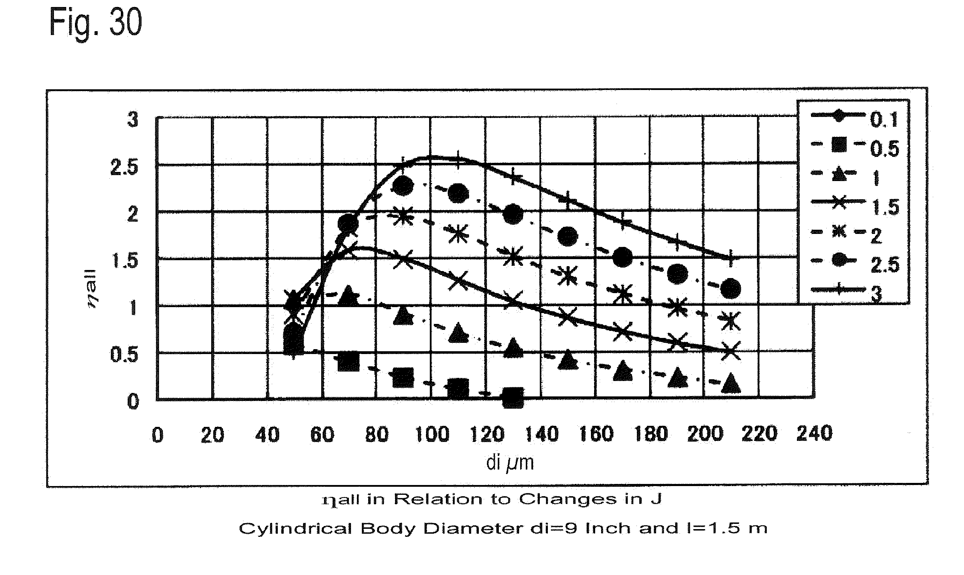

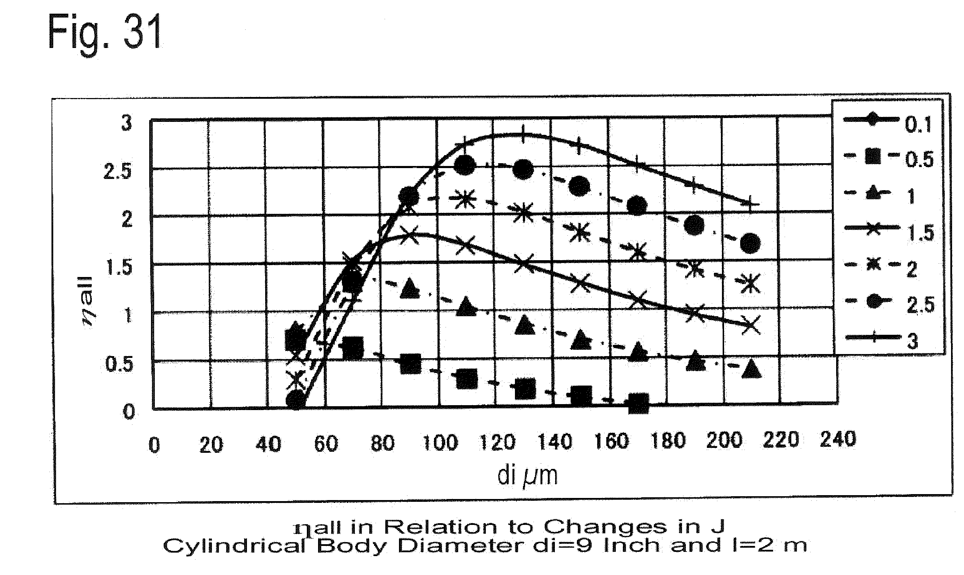

The overall efficiency $\eta_{all}$ when a bundle of hollow fiber forward osmosis membranes are inserted into a 9 inch diameter cylindrical body is shown in Tables 15 to 18 and FIGS. 28 to 31. As described above, the overall efficiency $\eta_{all}$ is acquired by dividing a net energy, which has been acquired by subtracting a consumption energy from an output energy, by the consumption energy. The output energy is an energy generated by the forward osmotic pressure power generation. The consumption energy is an energy consumed for the power generation. For example, the overall efficiency being 3 means the net energy is 3 times larger than the consumption energy.

[Table 15]

Cylindrical Body Diameter 9 Inch
L = 0.5 m

Table 15. $n_{all}$ for 9 Inch Diameter and L = 0.5 m

| di $\diagdown$ J $\left(\substack{rate \\ to\ J_0}\right)$ | 0.1 | 0.5 | 1 | 1.5 | 2 | 2.5 | 3 |
|---|---|---|---|---|---|---|---|
| 50 | -0.44005 | -0.09733 | 0.31601 | 0.70303 | 1.05545 | 1.36752 | 1.63614 |
| 70 | -0.46253 | -0.20696 | 0.10917 | 0.41946 | 0.72174 | 1.01403 | 1.29456 |
| 90 | -0.47577 | -0.27260 | -0.01971 | 0.23135 | 0.47987 | 0.72521 | 0.96674 |
| 110 | -0.48449 | -0.31600 | -0.10583 | 0.10360 | 0.31205 | 0.51925 | 0.72494 |
| 130 | -0.49065 | -0.34678 | -0.16714 | 0.01216 | 0.19100 | 0.36928 | 0.54687 |
| 150 | -0.49525 | -0.36972 | -0.21292 | -0.05630 | 0.10009 | 0.25619 | 0.41194 |

(continued)

| di\J ($\frac{rate}{to\ J_0}$) | 0.1 | 0.5 | 1 | 1.5 | 2 | 2.5 | 3 |
|---|---|---|---|---|---|---|---|
| 170 | -0.49880 | -0.38748 | -0.24839 | -0.10940 | 0.02946 | 0.16816 | 0.30667 |
| 190 | -0.50163 | -0.40163 | -0.27667 | -0.15176 | -0.02693 | 0.09780 | 0.22242 |
| 210 | -0.50394 | -0.41317 | -0.29973 | -0.18633 | -0.07298 | 0.04032 | 0.15354 |

[Table 16]

Cylindrical Body Diameter 9 Inch
L = 1 m

Table 16. $\eta_{all}$ for 9 Inch Diameter and L = 1 m

| di\J | 0.1 | 0.5 | 1 | 1.5 | 2 | 2.5 | 3 |
|---|---|---|---|---|---|---|---|
| 50 | -0.35420 | 0.29257 | 0.92318 | 1.30737 | 1.47742 | 1.50010 | 1.43631 |
| 70 | -0.39861 | 0.10370 | 0.68877 | 1.20022 | 1.62118 | 1.94666 | 2.18124 |
| 90 | -0.42497 | -0.02152 | 0.46904 | 0.93492 | 1.36762 | 1.76069 | 2.10989 |
| 110 | -0.44236 | -0.10659 | 0.30766 | 0.71205 | 1.10285 | 1.47674 | 1.83085 |
| 130 | -0.45469 | -0.16750 | 0.18893 | 0.54085 | 0.88648 | 1.22417 | 1.55239 |
| 150 | -0.46387 | -0.21312 | 0.09900 | 0.40881 | 0.71540 | 1.01792 | 1.31553 |
| 170 | -0.47097 | -0.24851 | 0.02884 | 0.30490 | 0.57918 | 0.85120 | 1.12049 |
| 190 | -0.47663 | -0.27674 | -0.02731 | 0.22135 | 0.46896 | 0.71524 | 0.95991 |
| 210 | -0.48125 | -0.29978 | -0.07322 | 0.15286 | 0.37829 | 0.60289 | 0.82649 |

[Table 17]

Cylindrical Body Diameter 9 Inch
L = 1.5 m

Table 17. n$_{all}$ for 9 Inch Diameter and L = 1.5 m

| di\J ($\frac{rate}{to\ J_0}$) | 0.1 | 0.5 | 1 | 1.5 | 2 | 2.5 | 3 |
|---|---|---|---|---|---|---|---|
| 50 | -0.27019 | 0.57721 | 1.05150 | 1.06190 | 0.89545 | 0.69485 | 0.50839 |
| 70 | -0.33513 | 0.38870 | 1.11333 | 1.57938 | 1.81050 | 1.87145 | 1.82653 |
| 90 | -0.37433 | 0.22118 | 0.90411 | 1.48256 | 1.93666 | 2.28531 | 2.48075 |
| 110 | -0.40031 | 0.09944 | 0.69935 | 1.25487 | 1.75210 | 2.18226 | 2.54173 |
| 130 | -0.41875 | 0.01018 | 0.53487 | 1.03873 | 1.51412 | 1.95488 | 2.35646 |
| 150 | -0.43250 | -0.05735 | 0.40569 | 0.85800 | 1.29543 | 1.71427 | 2.11134 |
| 170 | -0.44315 | -0.11000 | 0.30313 | 0.71031 | 1.10916 | 1.49749 | 1.87329 |
| 190 | -0.45164 | -0.15213 | 0.22029 | 0.58918 | 0.95314 | 1.31083 | 1.66098 |
| 210 | -0.45856 | -0.18657 | 0.15219 | 0.48874 | 0.82223 | 1.15180 | 1.47666 |

[Table 18]

Cylindrical Body Diameter 9 Inch
L = 2 m

Table 18. $\eta_{all}$ for 9 Inch Diameter and L = 2 m

| di\J ($\frac{rate}{to\ J_0}$) | 0.1 | 0.5 | 1 | 1.5 | 2 | 2.5 | 3 |
|---|---|---|---|---|---|---|---|
| 50 | -0.18944 | 0.70390 | 0.80650 | 0.55111 | 0.29378 | 0.09034 | -0.06516 |
| 70 | -0.27242 | 0.62649 | 1.30454 | 1.51715 | 1.46412 | 1.30246 | 1.11255 |
| 90 | -0.32394 | 0.44783 | 1.24182 | 1.78170 | 2.07901 | 2.19018 | 2.17781 |

(continued)

| di \ J (rate to J₀) | 0.1 | 0.5 | 1 | 1.5 | 2 | 2.5 | 3 |
|---|---|---|---|---|---|---|---|
| 110 | -0.35836 | 0.29895 | 1.04902 | 1.67761 | 2.16308 | 2.50638 | 2.72365 |
| 130 | -0.38287 | 0.18482 | 0.86087 | 1.47699 | 2.01562 | 2.46722 | 2.82979 |
| 150 | -0.40117 | 0.09683 | 0.70202 | 1.27567 | 1.80672 | 2.28691 | 2.71100 |
| 170 | -0.41535 | 0.02760 | 0.57163 | 1.09795 | 1.59985 | 2.07164 | 2.50884 |
| 190 | -0.42666 | -0.02807 | 0.46443 | 0.94641 | 1.41372 | 1.86265 | 2.28995 |
| 210 | -0.43588 | -0.07370 | 0.37542 | 0.81799 | 1.25137 | 1.67312 | 2.08100 |

For each curve line in FIGS. 28 to 31, a ratio (di/L) between the inner diameter di and the length L of the hollow fiber forward osmosis membrane, which results in the maximum value of the overall efficiency $\eta_{all}$ when the bundle of hollow fiber forward osmosis membranes is inserted in the 9 inch diameter cylindrical body, is shown only with effective number in Table 19.

[Table 19]

Table 19. Ratio between di and L (di/L) at Each Maximum Value for 9 Inch Diameter

| L \ J (rate to J₀) | 0.1 | 0.5 | 1 | 1.5 | 2 | 2.5 | 3 |
|---|---|---|---|---|---|---|---|
| 0.5 | | | | | | 116 | 134 |
| 1 | | | | | 70 | 71 | 75 |
| 1.5 | | | 43.3333 | 49.3333 | 55.3333 | 61.3333 | 67.3333 |
| 2 | | | 39.5 | 46 | 53 | 57.5 | 63 |

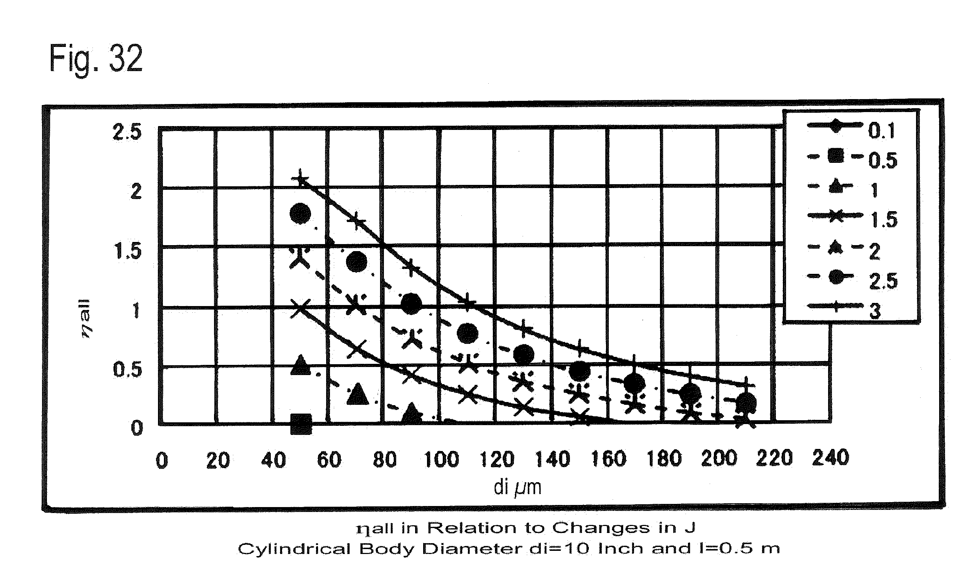

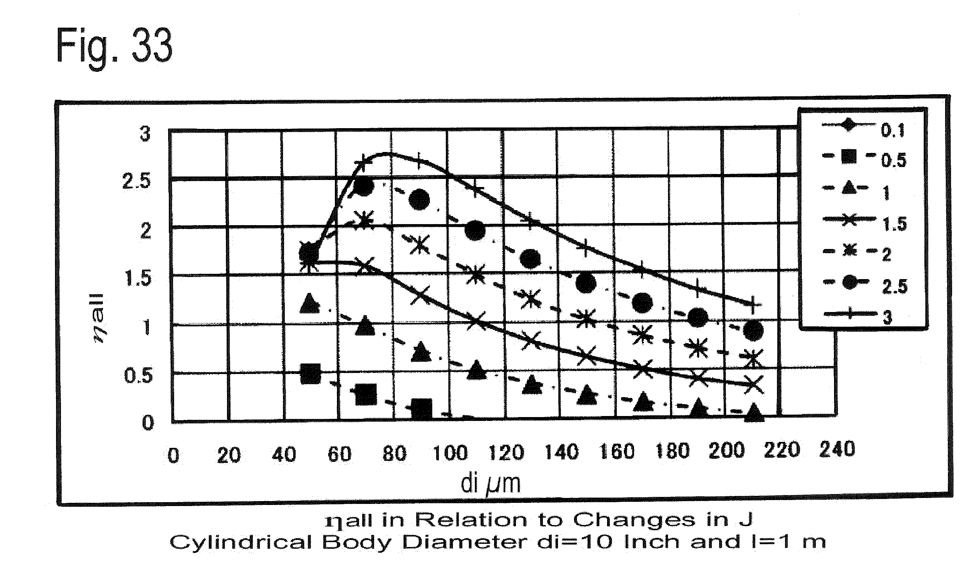

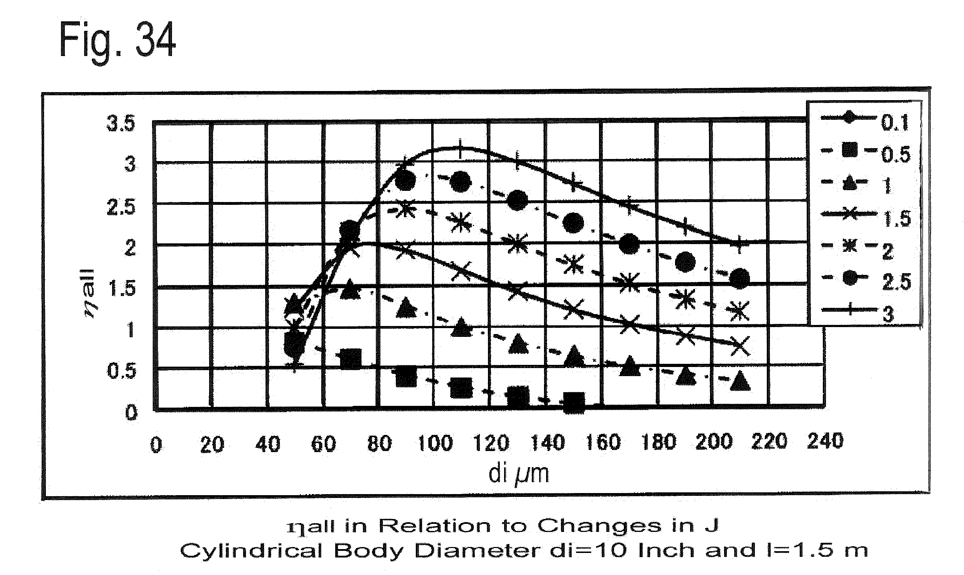

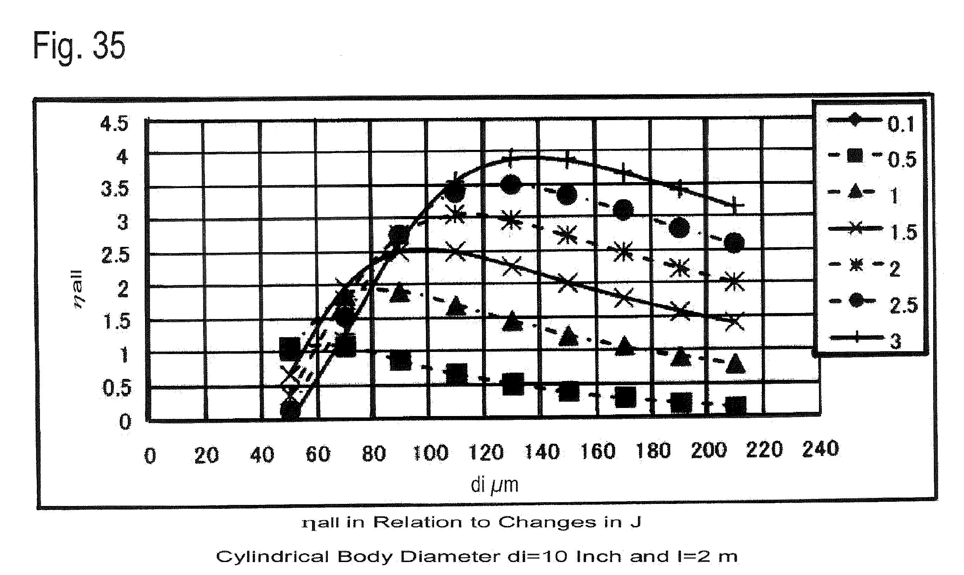

Next, the overall efficiency $\eta_{all}$ when a bundle of hollow fiber forward osmosis membranes are inserted into a 10 inch diameter cylindrical body is shown in Tables 20 to 23 and FIGS. 32 to 35.

[Table 20]

Cylindrical Body Diameter 10 Inch
L = 0.5 m

Table 20. $\eta_{all}$ for 10 Inch Diameter and L = 0.5 m

| di\J | 0.1 | 0.5 | 1 | 1.5 | 2 | 2.5 | 3 |
|---|---|---|---|---|---|---|---|
| 50 | -0.41866 | 0.00812 | 0.51950 | 0.99186 | 1.41335 | 1.77661 | 2.07876 |
| 70 | -0.44669 | -0.12810 | 0.26528 | 0.64998 | 1.02269 | 1.38045 | 1.72069 |
| 90 | -0.46321 | -0.20987 | 0.10525 | 0.41764 | 0.72625 | 1.03008 | 1.32815 |
| 110 | -0.47407 | -0.26398 | -0.00198 | 0.25894 | 0.51839 | 0.77596 | 1.03126 |
| 130 | -0.48176 | -0.30235 | -0.07837 | 0.14511 | 0.36792 | 0.58987 | 0.81080 |
| 150 | -0.48749 | -0.33096 | -0.13544 | 0.05982 | 0.25474 | 0.44922 | 0.64318 |
| 170 | -0.49193 | -0.35310 | -0.17966 | -0.00636 | 0.16674 | 0.33961 | 0.51219 |
| 190 | -0.49546 | -0.37075 | -0.21492 | -0.05917 | 0.09646 | 0.25195 | 0.40728 |
| 210 | -0.49834 | -0.38514 | -0.24368 | -0.10227 | 0.03907 | 0.18031 | 0.32146 |

[Table 21]

Cylindrical Body Diameter 10 Inch
L = 1 m

Table 21. $\eta_{all}$ for 10 Inch Diameter and L = 1 m

| di \ J $\left(\substack{rate\\to\ J_0}\right)$ | 0.1 | 0.5 | 1 | 1.5 | 2 | 2.5 | 3 |
|---|---|---|---|---|---|---|---|
| 50 | -0.31168 | 0.48606 | 1.22566 | 1.62771 | 1.76250 | 1.73286 | 1.61878 |
| 70 | -0.36700 | 0.25752 | 0.97484 | 1.58397 | 2.06387 | 2.41297 | 2.64360 |
| 90 | -0.39986 | 0.10270 | 0.71055 | 1.28155 | 1.80331 | 2.26712 | 2.66815 |
| 110 | -0.42155 | -0.00303 | 0.51206 | 1.01239 | 1.49233 | 1.94696 | 2.37230 |
| 130 | -0.43691 | -0.07887 | 0.36496 | 0.80202 | 1.22963 | 1.64527 | 2.04667 |
| 150 | -0.44836 | -0.13571 | 0.25319 | 0.63864 | 1.01926 | 1.39372 | 1.76076 |
| 170 | -0.45722 | -0.17982 | 0.16587 | 0.50964 | 0.85074 | 1.18843 | 1.52199 |
| 190 | -0.46428 | -0.21501 | 0.09593 | 0.40575 | 0.71399 | 1.02021 | 1.32400 |
| 210 | -0.47004 | -0.24374 | 0.03873 | 0.32049 | 0.60128 | 0.88082 | 1.15884 |

[Table 22]

Cylindrical Body Diameter 10 Inch
L = 1.5 m

Table 22. $n_{all}$ for 10 Inch Diameter and L = 1.5 m

| di \ J $\left(\substack{rate\\to\ J_0}\right)$ | 0.1 | 0.5 | 1 | 1.5 | 2 | 2.5 | 3 |
|---|---|---|---|---|---|---|---|
| 50 | -0.20723 | 0.81324 | 1.29193 | 1.22551 | 0.99622 | 0.75663 | 0.54717 |
| 70 | -0.28790 | 0.60574 | 1.46034 | 1.95721 | 2.15617 | 2.16081 | 2.05831 |
| 90 | -0.33672 | 0.40309 | 1.23678 | 1.91771 | 2.42343 | 2.76121 | 2.95613 |
| 110 | -0.36911 | 0.25303 | 0.99388 | 1.66858 | 2.25767 | 2.75067 | 3.14552 |
| 130 | -0.39210 | 0.14232 | 0.79333 | 1.41309 | 1.99034 | 2.51643 | 2.98561 |
| 150 | -0.40925 | 0.05835 | 0.63412 | 1.19379 | 1.73106 | 2.24048 | 2.71758 |
| 170 | -0.42253 | -0.00720 | 0.50710 | 1.01245 | 1.50525 | 1.98218 | 2.44029 |
| 190 | -0.43311 | -0.05968 | 0.40422 | 0.86284 | 1.31401 | 1.75570 | 2.18601 |
| 210 | -0.44174 | -0.10260 | 0.31953 | 0.73836 | 1.15257 | 1.56086 | 1.96199 |

[Table 23]

Cylindrical Body Diameter 10 Inch
L = 2 m

Table 23. $\eta_{all}$ for 10 Inch Diameter and L = 2 m

| di \ J $\left(\substack{rate\\to\ J_0}\right)$ | 0.1 | 0.5 | 1 | 1.5 | 2 | 2.5 | 3 |
|---|---|---|---|---|---|---|---|
| 50 | -0.04843 | 1.07211 | 1.01769 | 0.64679 | 0.33887 | 0.11310 | -0.05301 |
| 70 | -0.16482 | 1.06682 | 1.84005 | 1.94703 | 1.76471 | 1.50512 | 1.24959 |
| 90 | -0.23790 | 0.84534 | 1.88482 | 2.49230 | 2.73935 | 2.75121 | 2.63321 |
| 110 | -0.28686 | 0.64338 | 1.67116 | 2.47661 | 3.03771 | 3.37738 | 3.54039 |
| 130 | -0.32176 | 0.48435 | 1.42828 | 2.25897 | 2.94823 | 3.48679 | 3.88077 |
| 150 | -0.34783 | 0.36045 | 1.21292 | 2.00497 | 2.71668 | 3.33527 | 3.85512 |
| 170 | -0.36804 | 0.26246 | 1.03228 | 1.76800 | 2.45689 | 3.08897 | 3.65734 |
| 190 | -0.38415 | 0.18346 | 0.88214 | 1.56053 | 2.21057 | 2.82533 | 3.39922 |
| 210 | -0.39729 | 0.11860 | 0.75672 | 1.38218 | 1.98982 | 2.57493 | 3.13342 |

For each curve in FIGS. 32 to 35, a ratio (di/L) between the inner diameter di and the length L of the hollow fiber forward osmosis membrane, which results in the maximum value of the overall efficiency $\eta_{all}$ when the bundle of hollow fiber forward osmosis membranes is inserted in the 10 inch diameter cylindrical body, is shown only with effective number in Table 24.

[Table 24]

Table 24. Ratio between di and L (di/L) at Each Maximum Value for 10 Inch Diameter

| $L \diagdown J \left(\frac{rate}{to\ J_o}\right)$ | 0.1 | 0.5 | 1 | 1.5 | 2 | 2.5 | 3 |
|---|---|---|---|---|---|---|---|
| 0.5 | | | | | | | |
| 1 | | | | 56 | 71 | 75 | 78 |
| 1.5 | | | 46 | 51.3333 | 61.3333 | 66 | 72 |
| 2 | | 25 | 40.5 | 48 | 56.5 | 63 | 67 |

According to Tables 19 and 24, an equation that makes the optimal inner diameter (which results in the "maximum efficiency") of the hollow fiber forward osmosis membrane converge to a constant value is expressed by [Equation 11]. Wherein the inner diameter changes from 50 $\mu$m and 200 $\mu$m, the length L of the hollow fiber forward osmosis membrane from 0.5 m to 2 m and the permeation flux rate J from $J_0$ to $2J_0$ ($J_0 = 1.713 \times 10^{-7}$ m/s at 3 MPa).
The inner diameter d is measured in $\mu$m, and the length L is measured in m.
d = 50 to 200 $\mu$m
L = 0.5 to 2 m
J = $1.7 \times 10^{-7}$ to $5.1 \times 10^{-7}$ m/s.
$$[\text{Equation 11}]$$

$$\frac{d}{L^{0.75} \cdot J^{0.5}} = 1.0 \times 10^5 \sim 1.2 \times 10^5$$

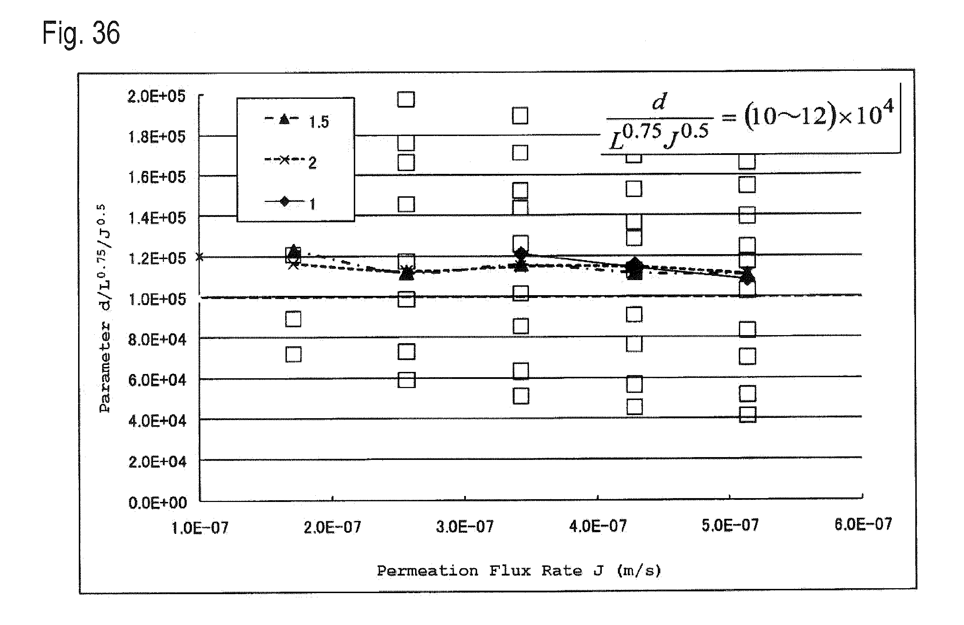

FIG. 36 shows the parameter $d/(L^{0.75} \cdot J^{0.5})$ when the length L in [Equation 11] is specified in the range of L = 0.5 to 2 m, similar to the specified range, it is evident that the parameter falls within the range.

## Claims

1. A hollow fiber forward osmosis membrane, wherein
a relationship between optimal conditions for an inner diameter d and a length L of the hollow fiber forward osmosis membrane to be used for forward osmotic pressure power generation whereby dilution water such as fresh water or seawater having a less saline concentration than concentrate seawater is caused to permeate into the concentrate seawater through the hollow fiber forward osmosis membrane to increase a flow rate on the side of the concentrate seawater using forward osmotic pressure energy thus generated, and electric power is generated using the increased flow rate, is expressed as [Equation (1)] in the range of d = 50 to 200 $\mu$m, L = 0.5 to 2 m and J = $3.42 \times 10^{-7}$ to $6.84 \times 10^{-7}$ m/sec,

$$[\text{Equation 1}]$$

$$\frac{d}{L^{0.75} \cdot J^{0.5}} = 1.9 \times 10^5 \sim 2.2 \times 10^5$$

wherein
J means permeation flux rate.

2. A hollow fiber forward osmosis membrane, wherein
the relationship between optimal conditions for an inner diameter d and a length L of the hollow fiber osmosis membrane to be used for forward osmotic pressure power generation whereby dilution water such as fresh water is caused to permeate into non-concentrate seawater through the hollow fiber osmosis membrane to increase a flow rate on the side of the seawater using forward osmotic pressure energy thus generated, and power is generated using the increased flow rate, is expressed as [Equation (11)] in the range of d = 50 to 200 $\mu$m, L = 0.5 to 2 m and J = 1.7 $\times$ 10$^{-7}$ to 5.1 $\times$ 10$^{-7}$ m/sec,

[Equation 11]

$$\frac{d}{L^{0.75} \cdot J^{0.5}} = 1.0 \times 10^5 \sim 1.2 \times 10^5$$

wherein
J means permeation flux rate.

# Fig. 1

# Fig.2

Fig.2

# Fig. 3

Experimental Results

Relationship between Stretch and Weight

Fig. 4

Relationship between Outer and Inner Diameters

di: Inner Diameter [m]

do: Outer Diameter [m]

# Fig. 5

Overall System Figure of Forward Osmotic Pressure Power Generation

EP 2 586 518 A1

Fig. 6A

Fig. 6B

Fig. 7

Fig. 8

Relationship between Inner Diameter and Permeation Flux Rate per Element

Fig. 9

1

2

Fig. 10

η all in Relation to Changes in J
Cylindrical Body Diameter di=9 Inch and l=0.5 m

Fig. 11

η all in Relation to Changes in J
Cylindrical Body Diameter di=9 Inch and l=1.0 m

Fig. 12

η all in Relation to Changes in J
Cylindrical Body Diameter di=9 Inch and l=1.5 m

Fig. 13

η all in Relation to Changes in J
Cylindrical Body Diameter di=9 Inch and l=2 m

EP 2 586 518 A1

Fig. 14

$\eta$ all in Relation to Changes in J
Cylindrical Body Diameter di=10 Inch and l=0.5 m

Fig. 15

η all in Relation to Changes in J
Cylindrical Body Diameter di=10 Inch and l=1 m

EP 2 586 518 A1

Fig. 16

η all in Relation to Changes in J
Cylindrical Body Diameter di=10 Inch and l=1.5 m

Fig. 17

η all in Relation to Changes in J
Cylindrical Body Diameter di=10 Inch and l=2 m

EP 2 586 518 A1

Fig. 18

EP 2 586 518 A1

Fig. 19

# Fig. 20

# Fig. 21

Experimental Results

Relationship between Stretch and Weight

EP 2 586 518 A1

Fig. 22

do: Outer Diameter [m]

di: Inner Diameter [m]

Relationship between Outer and Inner Diameters

## Fig. 23

Overall System Figure of Forward Osmotic Pressure Power Generation

EP 2 586 518 A1

Fig. 24A

Fig. 24B

Fig. 25

$$q + \frac{dq}{dl}\,dl$$

$q$

$dl$

$L$

$l$

Fig. 26

Relationship between Inner Diameter and Permeation Flux Rate per Element

Permeation Flux Rate per Element [m³/s]

Inner Diameter [m]

Effective Length $\alpha<1m$ $\Delta P$=1000kPa

Effective Length $\alpha<1m$ $\Delta P$=700kPa

Effective Length $\alpha<1m$ $\Delta P$=400kPa

Effective Length $\alpha<1m$ $\Delta P$=200kPa

Effective Length $\alpha>1m$

57

# Fig. 27

# Fig. 28

η all in Relation to Changes in J
Cylindrical Body Diameter di=9 Inch and l=0.5 m

EP 2 586 518 A1

# Fig. 29

ηall in Relation to Changes in J

Cylindrical Body Diameter di=9 Inch and l=1.0 m

EP 2 586 518 A1

# Fig. 30

η all in Relation to Changes in J

Cylindrical Body Diameter di=9 Inch and l=1.5 m

EP 2 586 518 A1

# Fig. 31

ηall in Relation to Changes in J
Cylindrical Body Diameter di=9 Inch and l=2 m

EP 2 586 518 A1

# Fig. 32

ηall in Relation to Changes in J
Cylindrical Body Diameter di=10 Inch and l=0.5 m

EP 2 586 518 A1

# Fig. 33

ηall in Relation to Changes in J
Cylindrical Body Diameter di=10 Inch and l=1 m

EP 2 586 518 A1

# Fig. 34

ηall in Relation to Changes in J
Cylindrical Body Diameter di=10 Inch and l=1.5 m

Fig. 35

ηall in Relation to Changes in J

Cylindrical Body Diameter di=10 Inch and l=2 m

Fig. 36

EP 2 586 518 A1

<table>
<tr><td colspan="2" style="text-align:center">**INTERNATIONAL SEARCH REPORT**</td><td colspan="2">International application No.<br>PCT/JP2011/064502</td></tr>
</table>

| A. CLASSIFICATION OF SUBJECT MATTER |
|---|
| *B01D61/00*(2006.01)i, *B01D63/02*(2006.01)i, *F03G7/00*(2006.01)i, *C02F1/44* (2006.01)n |

According to International Patent Classification (IPC) or to both national classification and IPC

| B. FIELDS SEARCHED |
|---|
| Minimum documentation searched (classification system followed by classification symbols)<br>B01D61/00, B01D63/02, F03G7/00, C02F1/44 |

Documentation searched other than minimum documentation to the extent that such documents are included in the fields searched

| Jitsuyo Shinan Koho | 1922-1996 | Jitsuyo Shinan Toroku Koho | 1996-2011 |
|---|---|---|---|
| Kokai Jitsuyo Shinan Koho | 1971-2011 | Toroku Jitsuyo Shinan Koho | 1994-2011 |

Electronic data base consulted during the international search (name of data base and, where practicable, search terms used)
JSTPlus/JMEDPlus/JST7580(JDreamII)

C. DOCUMENTS CONSIDERED TO BE RELEVANT

| Category* | Citation of document, with indication, where appropriate, of the relevant passages | Relevant to claim No. |
|---|---|---|
| A | JP 2003-176775 A (President of Tokyo Institute of Technology),<br>27 June 2003 (27.06.2003),<br>claims<br>(Family: none) | 1,2 |
| A | JP 1-123605 A (NKK Corp.),<br>16 May 1989 (16.05.1989),<br>claims<br>(Family: none) | 1,2 |
| A | JP 58-53684 A (Kajima Corp.),<br>30 March 1983 (30.03.1983),<br>claims<br>(Family: none) | 1,2 |

| ☒ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search<br>28 September, 2011 (28.09.11) | Date of mailing of the international search report<br>11 October, 2011 (11.10.11) |
|---|---|
| Name and mailing address of the ISA/<br>Japanese Patent Office | Authorized officer |
| Facsimile No. | Telephone No. |

Form PCT/ISA/210 (second sheet) (July 2009)

**INTERNATIONAL SEARCH REPORT**

International application No.

PCT/JP2011/064502

C (Continuation). DOCUMENTS CONSIDERED TO BE RELEVANT

| Category* | Citation of document, with indication, where appropriate, of the relevant passages | Relevant to claim No. |
|---|---|---|
| A | JP 62-58063 A (Industrial Technology Research Institute Denshi Gijutsu Sogo Kenkyushocho), 13 March 1987 (13.03.1987), claims; page 6, upper right column, line 6 to lower right column, line 20 (Family: none) | 1,2 |
| A | JP 2010-27213 A (Yugen Kaisha Fujimura Denshino Gijutsu Kenkyusho), 04 February 2010 (04.02.2010), claim 1; paragraph [0091]; fig. 21 (Family: none) | 1,2 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003176775 A

**Non-patent literature cited in the description**

- **SAIMOTO, A. ; HIRANO, T. ; IMAI, Y.** *Material Mechanics,* 108-110

- **HONDA, T.** *Bulletin of the Society of Sea Water Science, Japan,* 1990, vol. 44 (6